(19) Europäisches Patentamt / European Patent Office / Office européen des brevets

(11) **EP 4 145 784 A1**

(12) **EUROPEAN PATENT APPLICATION**
published in accordance with Art. 153(4) EPC

(43) Date of publication:
**08.03.2023 Bulletin 2023/10**

(21) Application number: **21809427.4**

(22) Date of filing: **18.05.2021**

(51) International Patent Classification (IPC):
*H04L 27/26* (2006.01)

(52) Cooperative Patent Classification (CPC):
**H04L 27/26**

(86) International application number:
**PCT/CN2021/094442**

(87) International publication number:
**WO 2021/233310 (25.11.2021 Gazette 2021/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.05.2020 CN 202010421304**
**27.05.2020 CN 202010463450**

(71) Applicant: **Huawei Technologies Co., Ltd.**
**Longgang District,**
**Shenzhen,**
**Guangdong 518129 (CN)**

(72) Inventors:
• LIANG, Dandan
Shenzhen, Guangdong 518129 (CN)
• GAN, Ming
Shenzhen, Guangdong 518129 (CN)
• LI, Yunbo
Shenzhen, Guangdong 518129 (CN)

(74) Representative: **Goddar, Heinz J.**
**Boehmert & Boehmert**
**Anwaltspartnerschaft mbB**
**Pettenkoferstrasse 22**
**80336 München (DE)**

(54) **PPDU TRANSMISSION METHOD AND APPARATUS**

(57) This application provides a PPDU transmission method and apparatus, and relates to the field of communication technologies. The method includes: generating a PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor; and sending the PPDU with the bandwidth of X MHz. According to the solutions of this application, a PAPR for transmitting a PPDU in a large bandwidth can be reduced.

FIG. 3

**Description**

This application claims priority to Chinese Patent Application No. 202010421304.0, filed with the China National Intellectual Property Administration on May 18, 2020 and entitled "PPDU TRANSMISSION METHOD AND APPARATUS", and claims priority to Chinese Patent Application No. 202010463450.X, filed with the China National Intellectual Property Administration on May 27, 2020 and entitled "PPDU TRANSMISSION METHOD AND APPARATUS", which are incorporated herein by reference in their entireties.

**TECHNICAL FIELD**

Embodiments of this application relate to the field of communication technologies, and in particular, to a physical layer protocol data unit (physical protocol data unit, PPDU) transmission method and apparatus.

**BACKGROUND**

An orthogonal frequency division multiplexing (orthogonal frequency division multiplexing, OFDM) technology is a multi-carrier modulation technology. The OFDM technology has advantages of high spectral efficiency and anti-multipath fading, and the like, but it also has a disadvantage of a high peak to average power ratio (peak to average power ratio, PAPR). Because superposition of a plurality of sub-carriers in OFDM leads to a relatively large peak signal, a high power amplifier needs to have a relatively large linear dynamic range. This increases costs of the high power amplifier and also reduces efficiency of the high power amplifier. If the peak value exceeds the linear dynamic range of the high power amplifier, in-band distortion and out-of-band dispersion are caused. Therefore, PAPR reduction is a key technology to an OFDM system and has great significance.

With rapid development of wireless communication technologies, 6 GHz newly introduced in the wireless communication protocol 802.11ax may support a bandwidth greater than 160 MHz. However, a PAPR problem faced when a higher bandwidth is used is more serious. How to reduce a PAPR in a larger bandwidth is an urgent problem to be resolved.

**SUMMARY**

Embodiments of this application provide a PPDU transmission method and apparatus, to reduce a PAPR for transmitting a PPDU in a large bandwidth.

To achieve the foregoing objectives, the following technical solutions are used in embodiments of this application.

According to a first aspect, a PPDU transmission method is provided. The method includes: generating a physical layer protocol data unit PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor; and sending the PPDU with the bandwidth of X MHz. That some or all fields in the PPDU are rotated in the bandwidth of X MHz by using a rotation factor sequence may also be: Each of the some or all fields in the PPDU is rotated in the n bandwidths of Y MHz by using the rotation factor sequence. In the foregoing technical solution, the PPDU with a bandwidth greater than 160 MHz may be generated, and the some or all fields in the PPDU are rotated in the bandwidth of X MHz by using the rotation factor sequence. In this way, PAPRs of some or all fields in the PPDU when a high bandwidth is used can be reduced by using a specific rotation factor sequence.

According to a second aspect, a PPDU transmission method is provided. The method includes: receiving a physical layer protocol data unit PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor; and performing rotation recovery on the PPDU based on the rotation factor sequence.

With reference to the first aspect or the second aspect, in a possible implementation, the X MHz is any one of the following: 240 MHz or 320 MHz. In the foregoing possible implementation, several bandwidths greater than 160 MHz are provided, to improve diversity of high bandwidths, and further increase a PPDU transmission rate when a PPDU is transmitted over a high bandwidth.

With reference to the first aspect or the second aspect, in a possible implementation, one or more fields in a legacy short training field L-STF, a legacy long training field L-LTF, a legacy signal field L-SIG, a repeated legacy signal field RL-SIG, a universal signal field U-SIG, or an extremely high throughput signal field EHT-SIG that are included in the PPDU are duplicated in the n bandwidths of Y MHz; and the one or more fields in the L-STF, L-LTF, L-SIG, U-SIG, and EHT-SIG are rotated by using the rotation factor sequence. In the foregoing possible implementation, one or more fields in the L-STF, L-LTF, L-SIG, RL-SIG, U-SIG, and EHT-SIG in the PPDU are rotated, so that a PAPR of a legacy preamble in the PPDU during duplicate transmission can be reduced.

With reference to the first aspect or the second aspect, in a possible implementation, Y=20 MHz, and the first four rotation factors in the rotation factor sequence are [1-1-1]; or Y=20 MHz, and the first eight rotation factors in the rotation factor sequence are [1 -1 -1 -1 1 -1 -1]. In the foregoing possible implementation, the rotation factor of a large bandwidth may include a set rotation factor of a bandwidth of 80 MHz or a set rotation factor in a bandwidth of 160 MHz. This improves efficiency of obtaining a rotation factor sequence.

With reference to the first aspect or the second aspect, in a possible implementation, X=320, and the rotation factor sequence is any one of the following sequences: [1 -1 -1 -1 j j j -1 j -1 -j 1 -j -1 j -j], [1 -1 -1 -1 1 -1 -1 -1 -1 -1 1 1 -1 1 -1 j], [1 -1 -1 -1j -1 1 j j 1 -1j -1 -1 -1 1], [1 -1 -1 -1 1 1 -1 -1 -1 -1 -1 -1 1 -1 1 1], [1 -1 -1 -1 j j j -1 j -1 -j j -j j 1 -j], [1 -1 -1 -1 1 -1 -1 -1 -1 -1 1 1 -1 1 1 -1], [1 -1 -1 -1 1 -1 -1 -1 -1 1 1 1 -1 1 1 1], [1-1-1-1-1-1-1111-11-111-1], [1 -1 -1 -1 1 -1 -1 -1 -1 -1-11-111 -1], [1 -1 -1 -1 1 -1 -1 - 1 -1 1 1 1 -1 1 1 1], [1 -1 -1 -1-1-1-1111-11-111 -1], [1 -1 -1 -1 1 -1 -1 -1 -1 -1-11-111 -1], [1 -1 - 1-11-1-1-1-1111-1111], [1 -1 -1 -1 j1 -1 j -1 -j -1 -j j j -1 1], and [1 -1 -1 -1 1 -1 -1 -1 -1 -1 1 -1 1 1-1]. In the foregoing possible implementation, when the PPDU is transmitted by using the bandwidth of 320 MHz, a PAPR of the PPDU when the bandwidth of 320 MHz is used can be minimized by using the foregoing rotation factor sequence.

With reference to the first aspect or the second aspect, in a possible implementation, X=240, and the rotation factor sequence is any one of the following sequences: [1 -1 -1 -1 1-1 1 1 -1 1 1 1], [1 j -j -1 -1 -j -j -1 - 1 -j j 1], [1 -1 1 1 1 -1 1 -1 -1 1 1], [1 1 1 -1 -1 1 -1 1 1 1 -1 1], [1 -1 -1 -1j1 -j 1 1 1 -1 1], [1 -1 -1 -1 1 1 1 - 1 1 1 -1 1], [1 1 1 1 -1 -1 1 1 -1 1 -1 1], [1 -1 -1 -1 1 -1 -1 -1 -1 1 j 1], [1 -1 -1 -1 -1 -1 -1 1 -1 1 1 -1], [1 1 -1 j -1 -1 -j j -1 j j -j], [1 -1 -1 -1 1 -1 -1 -1 j -1 -1 1], [1 -1 -1 -1 1-1 -1 -1 -1 1 1 1], [1 -1 -1 -1 -1 -1 -1 1-1 1 1 -1], [11 -11-11 -1 -1 -1 -1 1 1], [1 -1 -1 -1 1 -1 -1 -1 j -1 -1 1], [1 -1 -1 -1 1 -1 -1 -1-11 1 1], [1 -1 -1 - 1-1 -1 -1 1 -1 1 1 -1], [11-11 -1 1 -1 -1 -1 -1 1 1], [1 -1 -1 -1 1 -1 -1 -1 j -1 -1 1], [1 -1 -1 -1 1 -1 -1 -1 -1 1 1 1], [1 -1 -1 -1 -1 -1 -1 1 1 -1 1 1 -1], [1 j -1 -jj 1 j 1 j 1 j -1], [1 -1 -1 -1 1 -1 -1 -1 j -1 -1 1], and [1 -1 -1 - 1 1-1-1-1-11 1 1]. In the foregoing possible implementation, when the PPDU is transmitted by using the bandwidth of 240 MHz, a PAPR of the PPDU when the bandwidth of 240 MHz is used can be minimized by using the foregoing rotation factor.

According to a third aspect, a PPDU transmission apparatus is provided. The apparatus includes: a generation unit, configured to generate a physical layer protocol data unit PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor; and a sending unit, configured to send the PPDU with the bandwidth of X MHz.

According to a fourth aspect, a PPDU transmission apparatus is provided. The apparatus includes: a receiving unit, configured to receive a physical layer protocol data unit PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor; and a processing unit, configured to perform rotation recovery on the PPDU based on the rotation factor sequence.

With reference to the third aspect or the fourth aspect, in a possible implementation, the X MHz is any one of the following: 240 MHz or 320 MHz. In the foregoing possible implementation, several bandwidths greater than 160 MHz are provided, to improve diversity of high bandwidths, and further increase a PPDU transmission rate when a PPDU is transmitted over a high bandwidth.

With reference to the third aspect or the fourth aspect, in a possible implementation, one or more fields in a legacy short training field L-STF, a legacy long training field L-LTF, a legacy signal field L-SIG, a repeated legacy signal field RL-SIG, a universal signal field U-SIG, or an extremely high throughput signal field EHT-SIG that are included in the PPDU are duplicated in the n bandwidths of Y MHz; and the one or more fields in the L-STF, L-LTF, L-SIG, U-SIG, and EHT-SIG are rotated by using the rotation factor sequence. In the foregoing possible implementation, one or more fields in the L-STF, L-LTF, L-SIG, RL-SIG, U-SIG, and EHT-SIG in the PPDU are rotated, so that a PAPR of a legacy preamble in the PPDU during duplicate transmission can be reduced.

With reference to the third aspect or the fourth aspect, in a possible implementation, Y=20 MHz, and the first four rotation factors in the rotation factor sequence are [1 -1 -1]; or Y=20 MHz, and the first eight rotation factors in the rotation factor sequence are [1 -1 -1 -1 1 -1 -1]. In the foregoing possible implementation, the rotation factor of a large bandwidth may include a set rotation factor of a bandwidth of 80 MHz or a set rotation factor of a bandwidth of 160 MHz. This improves efficiency of obtaining a rotation factor sequence.

With reference to the third aspect or the fourth aspect, in a possible implementation, X=320, and the rotation factor sequence is any one of the following sequences: [1 -1 -1 -1 j j j -1 j -1 -j 1 -j -1 j -j], [1 -1 -1 -1 1 -1 -1 -1 -1 -1 1 1 -1 1 -1 j], [1 -1 -1 -1j-1 1 j j 1 -1j-1 -1 -1 1], [1 -1 -1 -1 1 1 -1 -1 -1 -1 -1 -1 1 1 -1 1 1], [1 -1 -1 -1 j j j -1 j -1 -jj-jj 1 -j], [1 -1 -1 -1 1 -1 -1 -1 -1 -1 1-1 1 1 -1], [1 -1 -1 -1 1 -1 -1 -1 -1 1 1 1 -1 1 1 1], [1-1-1-1-1-1-1111-11-111-1], [1 -1 -1 -1 1 -1 -1 -1 -1 -1-11-111 -1], [1 -1 -1 -1 1 -1 -1 - 1 -1 1 1 1 -1 1 1 1], [1 -1 -1 -1-1-1-1111-11-111 -1], [1 -1 -1 -1 1 -1 -1 -1 -1

-1-11-111 -1], [1 -1 - 1-11-1-1-1-1111-1111], [1 -1 -1 -1 j 1 -1 j -1 -j -1 -j j j -1 1], and [1 -1 -1 -1 1 -1 -1 -1 -1 -1 -1 1 -1 1 1-1]. In the foregoing possible implementation, when the PPDU is transmitted by using the bandwidth of 320 MHz, a PAPR of the PPDU when the bandwidth of 320 MHz is used can be minimized by using the foregoing rotation factor sequence.

With reference to the third aspect or the fourth aspect, in a possible implementation, X=240, and the rotation factor sequence is any one of the following sequences: [1 -1 -1 -1 1-1 1 1 -1 1 1 1], [1 j -j -1 -1 -j -j -1 - 1 -j j 1], [1 -1 1 1 1 -1 1 -1 -1 1 1 1], [1 1 1 -1 -1 1 -1 1 1 1 -1 1], [1 -1 -1 -1j1 -j 1 1 1 -1 1], [1 -1 -1 -1 1 1 1 - 1 1 1 -1 1], [1 1 1 1 -1 -1 1 1 -1 1 -1 1], [1 -1 -1 -1 1 -1 -1 -1 -1 1 j 1], [1 -1 -1 -1 -1 -1 -1 1 -1 1 1 -1], [1 1 -1 j -1 -1 -j j -1 j j -j], [1 -1 -1 -1 1 1 -1 -1 -1 j -1 -1 1], [1 -1 -1 -1 1-1 -1 -1 -1 1 1 1], [1 -1 -1 -1 -1 -1 -1 1-1 1 1 -1], [11 -11-11 -1 -1 -1 -1 1 1], [1 -1 -1 -1 1 1 -1 -1 -1 j -1 -1 1], [1 -1 -1 -1 1 -1 -1 -1-11 1 1], [1 -1 -1 - 1-1 -1 -1 1 -1 1 1 -1], [11-11 -1 1 -1 -1 -1 -1 1 1], [1 -1 -1 -1 1 -1 -1 -1 j -1 -1 1], [1 -1 -1 -1 1 -1 -1 -1 -1 1 1 1], [1 -1 -1 -1 -1 -1 -11-1 1 1 -1], [1 j -1 -jj 1 j 1 j 1 j -1], [1 -1 -1 -1 1 -1 -1 -1 j -1 -1 1], and [1 -1 -1 - 1 1-1-1-1-11 1 1]. In the foregoing possible implementation, when the PPDU is transmitted by using the bandwidth of 240 MHz, a PAPR of the PPDU when the bandwidth of 240 MHz is used can be minimized by using the foregoing rotation factor.

According to a fifth aspect, a PPDU transmission apparatus is provided.

In a possible implementation, the PPDU transmission apparatus may be an information transmission device, and the PPDU transmission apparatus includes a processor and a transceiver. The processor is configured to control and manage an action of the PPDU transmission apparatus, for example, configured to support the PPDU transmission apparatus in performing a step of generating a physical layer protocol data unit PPDU with a bandwidth of X MHz, and/or another technical process described in this specification. The transceiver is configured to support the PPDU transmission apparatus in sending the PPDU with the bandwidth of X MHz. Optionally, the PPDU transmission apparatus may further include a memory.

In another possible implementation, the PPDU transmission apparatus may be an information transmission board, and the PPDU transmission apparatus includes a processor and a transceiver. The processor is configured to control and manage an action of the PPDU transmission apparatus, for example, configured to support the PPDU transmission apparatus in performing a step of generating a physical layer protocol data unit PPDU with a bandwidth of X MHz, and/or another technical process described in this specification. The transceiver is configured to support the PPDU transmission apparatus in sending the PPDU with the bandwidth of X MHz. Optionally, the PPDU transmission apparatus may further include a memory.

In still another possible implementation, the PPDU transmission apparatus is also implemented by a general-purpose processor, namely, a chip. The general-purpose processor includes a processing circuit and a communication interface. The processing circuit is configured to perform a step of generating a physical layer protocol data unit PPDU with a bandwidth of X MHz, and the communication interface is configured to send the PPDU with the bandwidth of X MHz.

Optionally, the general-purpose processor may further include a storage medium. The processing circuit communicates with the outside through the communication interface. The communication interface may be an input/output interface, an interface circuit, an output circuit, an input circuit, a pin, a related circuit, or the like in the chip or the chip system. The processor may alternatively be embodied as a processing circuit or a logic circuit. The storage medium is configured to store program code. The communication interface is configured to support the PPDU transmission apparatus in performing communication. When the program code is executed by the processor, the program code is used for generating a physical layer protocol data unit PPDU with a bandwidth of X MHz, and controlling the communication interface to send the PPDU with the bandwidth of X MHz.

In yet another possible implementation, the PPDU transmission apparatus may also be implemented by using one or more FPGAs, a PLD, a controller, a state machine, gate logic, a discrete hardware component, any other suitable circuit, or any combination of circuits that can implement various functions described in this application.

According to a sixth aspect, a PPDU transmission apparatus is provided.

In a possible implementation, the PPDU transmission apparatus may be an information transmission device. The PPDU transmission apparatus includes a processor and a transceiver. The transceiver is configured to support the PPDU transmission apparatus in performing a step of receiving a PPDU with a bandwidth of X MHz. The processor is configured to control and manage an action of the PPDU transmission apparatus, for example, configured to support the PPDU transmission apparatus in performing a step of performing rotation recovery on the PPDU based on a rotation factor sequence, and/or another technical process described in this specification. Optionally, the PPDU transmission apparatus may further include a memory.

In another possible implementation, the PPDU transmission apparatus may be an information transmission board. The PPDU transmission apparatus includes a processor and a transceiver. The transceiver is configured to support the PPDU transmission apparatus in performing a step of receiving a PPDU with a bandwidth of X MHz. The processor is configured to control and manage an action of the PPDU transmission apparatus, for example, configured to support the PPDU transmission apparatus in performing a step of performing rotation recovery on the PPDU based on a rotation factor sequence, and/or another technical process described in this specification. Optionally, the PPDU transmission apparatus may further include a memory.

In still another possible implementation, the PPDU transmission apparatus is also implemented by a general-purpose processor, namely, a chip. The general-purpose processor includes a processing circuit and a communication interface. The communication interface is configured to receive a PPDU with a bandwidth of X MHz, and the processing circuit is configured to perform rotation recovery on the PPDU based on a rotation factor sequence. Optionally, the general-purpose processor may further include a storage medium.

The processing circuit communicates with the outside through the communication interface. The communication interface may be an input/output interface, an interface circuit, an output circuit, an input circuit, a pin, a related circuit, or the like in the chip or the chip system. The processor may alternatively be embodied as a processing circuit or a logic circuit. The storage medium is configured to store program code. The communication interface is configured to support the PPDU transmission apparatus in performing communication. When the program code is executed by the processor, the program code is used for performing rotation recovery on the PPDU based on a rotation factor sequence, and controlling the communication interface to receive the PPDU with the bandwidth of X MHz.

In yet another possible implementation, the PPDU transmission apparatus may also be implemented by using one or more FPGAs, a PLD, a controller, a state machine, gate logic, a discrete hardware component, any other suitable circuit, or any combination of circuits that can implement various functions described in this application. According to a seventh aspect, a computer-readable storage medium is provided. The computer-readable storage medium stores instructions. When the instructions are run on a computer, the computer is enabled to perform the PPDU transmission method according to any one of the first aspect, the second aspect, or the possible implementations of the first aspect or the second aspect.

According to an eighth aspect, a computer program product including instructions is provided. When the computer program product is run on a computer, the computer is enabled to perform the PPDU transmission method according to any one of the first aspect, the second aspect, or the possible implementations of the first aspect or the second aspect.

It can be understood that any one of the apparatus for performing the PPDU transmission method, the computer storage medium, or the computer program product provided above is configured to perform the corresponding method provided above. Therefore, for beneficial effects that can be achieved by the apparatus, computer storage medium, or computer program product, refer to the beneficial effects in the corresponding method provided above. Details are not described herein again.

## BRIEF DESCRIPTION OF DRAWINGS

FIG. 1 is a schematic diagram of a structure of a communication system according to an embodiment of this application;

FIG. 2 is a schematic diagram of a frame structure of a PPDU according to an embodiment of this application;

FIG. 3 is a schematic flowchart of a PPDU transmission method according to an embodiment of this application;

FIG. 4 is a schematic diagram of a 320 MHz PPDU according to an embodiment of this application;

FIG. 5 is a schematic diagram of PPDU transmission on 80 MHz according to an embodiment of this application;

FIG. 6 is a schematic diagram of a structure of a PPDU transmission apparatus according to an embodiment of this application;

FIG. 7 is a schematic diagram of a structure of another PPDU transmission apparatus according to an embodiment of this application;

FIG. 8 is a schematic diagram of a structure of still another PPDU transmission apparatus according to an embodiment of this application; and

FIG. 9 is a schematic diagram of a structure of yet another PPDU transmission apparatus according to an embodiment of this application.

## DESCRIPTION OF EMBODIMENTS

The following describes technical solutions in embodiments of this application with reference to the accompanying drawings in embodiments of this application.

It should be understood that, embodiments of this application may be applied to various communication systems, for example, a global system for mobile communication (global system for mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5G communication system, and a future 6G communication system.

It should be further understood that embodiments of this application may be further applied to various non-orthogonal multiple access technology-based communication systems, for example, a sparse code multiple access (sparse code multiple access, SCMA) system. Certainly, SCMA may also be referred to as another name in the communication field. Further, the technical solutions in embodiments of this application may be applied to a multi-carrier transmission system using the non-orthogonal multiple access technology, for example, an orthogonal frequency division multiplexing (orthogonal frequency division multiplexing, OFDM) system using the non-orthogonal multiple access technology, a filter bank multi-carrier (filter bank multi-carrier, FBMC) system, a generalized frequency division multiplexing (generalized frequency division multiplexing, GFDM) system, and a filtered-orthogonal frequency division multiplexing (filtered-OFDM, F-OFDM) system.

It should be further understood that, embodiments of this application may be applied to an LTE system, a 5G system and a subsequent evolved system such as 6G or other wireless communication systems using various radio access technologies, for example, systems using access technologies such as code division multiple access, frequency division multiple access, time division multiple access, orthogonal frequency division multiple access, and single-carrier frequency division multiple access, and particularly applicable to a scenario in which a channel information feedback is required and/or a two-stage precoding technology is used, for example, a wireless network using a massive MIMO technology or a wireless network using a distributed antenna technology.

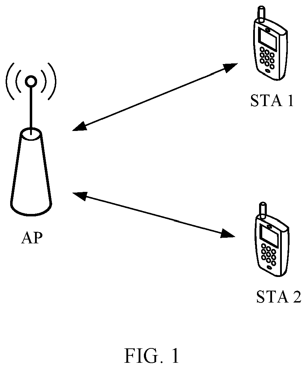

It should also be understood that embodiments of this application may be applied to Wi-Fi wireless communication. A Wi-Fi wireless communication system includes an access point (access point, AP) and a station (station, STA). The station may also be referred to as a site. Related wireless communication scenarios may include communication between an AP and a STA, communication between APs, communication between STAs, and the like. In embodiments of this application, communication between an AP and a STA is used as an example for description. In this embodiment of this application, communication between an AP and a STA is used as an example for description. As shown in FIG. 1, an AP performs wireless communication with a STA 1 and a STA 2. It should be understood that a method described in embodiments of this application is also applicable to communication between APs, communication between STAs, and the like.

A structure of each of the AP and the STA in embodiments of this application may include a media access control (media access control, MAC) layer and a physical (physical, PHY) layer. The AP and the STA may perform PPDU transmission by using a physical layer protocol data unit (PHY Protocol Data Unit, PPDU). In addition, a frame structure of the PPDU varies with a wireless communication protocol used by the AP and the STA.

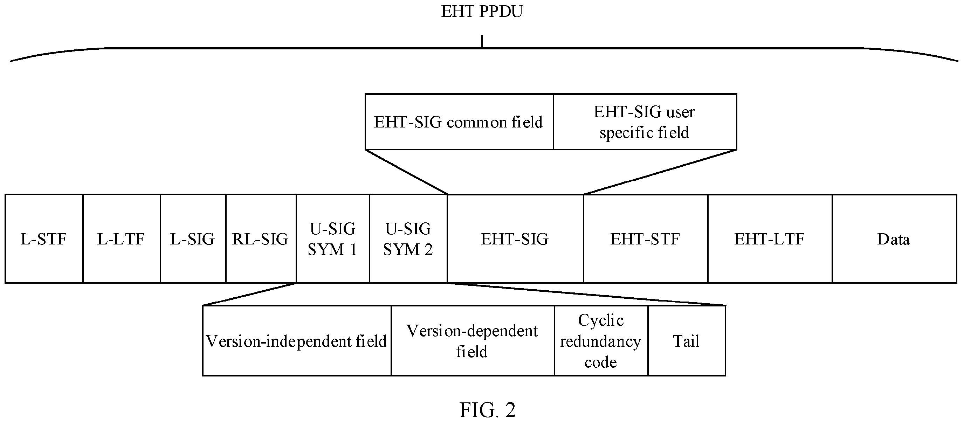

For example, if the wireless communication protocol used by the AP and the STA is 802.11be, the frame structure of the PPDU is shown in FIG. 2, and includes a legacy short training sequence field (legacy-short training field, L-STF), a legacy long training sequence field (legacy-long training field, L-LTF), a legacy-signal field (legacy-signal field, L-SIG), a repeat legacy-signal field (repeated legacy-signal field, RL-SIG), a universal signal field symbol 1 (universal signal field symbol 1, U-SIG SYM 1), a universal signal field symbol 2 (universal signal field symbol 2, U-SIG SYM 2), a very high throughput signal field (extremely high throughput-signal field, EHT-SIG), and an extremely high throughput short training sequence field (extremely high throughput-short training field, EHT-STF), an extremely high throughput long training sequence field (extremely high throughput-long training field, EHT-LTF), and a data field (data). It should be noted that the L-STF, the L-LTF, and the L-SIG in the foregoing fields may be referred to as legacy preambles. The U-SIG SYM1 and the U-SG SYM 2 may specifically include a version independent field, a version dependent field, a cyclic redundancy code, and a tail. The EHT-SIG may specifically include an EHT-SIG common field and an EHT-SIG user specific field.

It should be noted that the foregoing uses only the frame structures of the PPDUs in 802.11n, 802. 11ac, 802.11ax, and 802.11be as examples for description. The PPDU in embodiments of this application is mainly a next-generation Wi-Fi PPDU with an ultra-high bandwidth, and the foregoing frame structures of the PPDUs do not constitute a limitation on embodiments of this application.

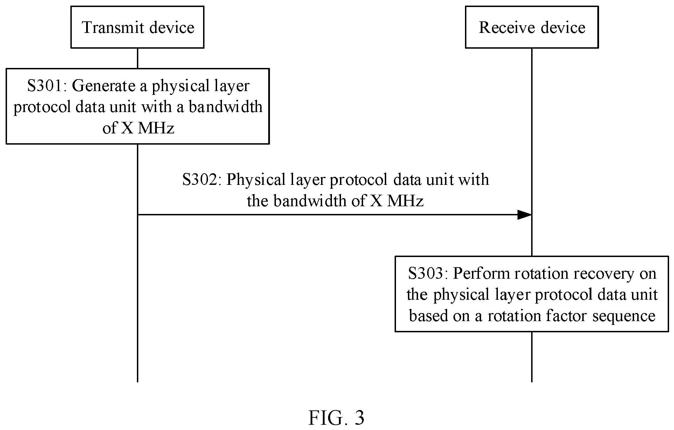

FIG. 3 is a schematic flowchart of a PPDU transmission method according to an embodiment of this application. Refer to FIG. 3. The method includes the following several steps.

Step S301: A transmit device generates a physical layer protocol data unit PPDU with a bandwidth of X MHz, where X > 160, some or all fields in the PPDU are rotated in the bandwidth of X MHz by using a rotation factor sequence, the bandwidth of X MHz includes n bandwidths of Y MHz, the rotation factor sequence includes n rotation factors, and each bandwidth of Y MHz is corresponding to one rotation factor.

The transmit device may be an AP or a STA. When the transmit device is an AP, the AP may perform PPDU transmission with another AP or STA by using the PPDU with the bandwidth of X MHz. When the transmit device is a STA, the STA may perform PPDU transmission with an AP or another STA by using the PPDU with the bandwidth of X MHz.

In addition, the bandwidth of X MHz is greater than 160 MHz. For example, X MHz may be 180 MHz, 200 MHz, 240 MHz, 280 MHz, 300 MHz, 320 MHz, or the like. This is not specifically limited in embodiments of this application. Y MHz may be 20 MHz, 10 MHz, 5 MHz, 2 MHz, or the like. This is not specifically limited in embodiments of this application. A value of each of the n rotation factors included in the rotation factor sequence may be 1, -1, j, or -j, where a rotation angle corresponding to the rotation factor 1 is 0 degrees, a rotation angle corresponding to the rotation factor -1 is 180 degrees, a rotation angle corresponding to the rotation factor j is 90 degrees, and a rotation angle corresponding to the rotation factor -j is -90 degrees.

In addition, the PPDU may include a plurality of fields. For example, the PPDU may include fields shown in FIG. 2. That some or all fields in the PPDU are rotated in the bandwidth of X MHz by using a rotation factor sequence may include: Some fields in the PPDU are rotated in the bandwidth of X MHz by using the rotation factor sequence, and fields other than the some fields in the PPDU are not rotated in the bandwidth of X MHz; or all the fields in the PPDU are rotated in the bandwidth of X MHz by using the rotation factor sequence.

Alternatively, that some or all fields in the PPDU are rotated in the bandwidth of X MHz by using a rotation factor sequence may be understood as: Each of the some or all fields of the PPDU is rotated in the bandwidth of X MHz by using the rotation factor sequence. Specifically, each field is rotated in each of n bandwidths of Y MHz based on a rotation factor sequence whose length is n, where the rotation factor sequence includes n rotation factors, the bandwidth of X MHz includes n bandwidths of Y MHz, and one rotation factor is corresponding to one Y MHz. For example, X=320 MHz, Y=20 MHz, and n=16, that is, 320 MHz includes 16 bandwidths of 20 MHz. The rotation factor sequence includes 16 rotation factors, and the 16 rotation factors are in a one-to-one correspondence with the 16 bandwidths of 20 MHz.

The X-MHz PPDU includes a plurality of fields in time domain, and includes n bandwidths of Y MHz in frequency domain. Each field in time domain is corresponding to n bandwidths of Y MHz in frequency domain. For the n bandwidths of Y MHz corresponding to each field, each of the n bandwidths of Y MHz may carry the field (that is, the n bandwidths of Y MHz corresponding to the field are fully occupied), or an empty bandwidth of Y MHz that does not carry the field may exist in the n bandwidths of Y MHz, but other fields do not occupy the empty bandwidth of Y MHz. The empty bandwidth of Y MHz exists because a channel is busy, or some supported frequency bands (for example, 5 GHz and 6 GHz) are occupied by another system such as a military radar system or a meteorological radar system, frequency bands available when a Wi-Fi system occupies an ultra-high bandwidth are non-contiguous. The bandwidth of Y MHz is empty, and it may be considered that the bandwidth of Y MHz is punctured.

In addition, when an empty bandwidth of Y MHz exists in n bandwidths of Y MHz corresponding to a field in the PPDU, when the field is rotated by using the rotation factor sequence, a rotation factor corresponding to the empty bandwidth of Y MHz is not used.

For example, the frame structure of the PPDU shown in FIG. 2 is used as an example. Each of the L-STF field, the L-LTF field, the L-SIG field, the RL-SIG field, the U-SIG field, and the EHT-SIG field in the PPDU may be rotated in the n bandwidths of Y MHz by using the rotation factor sequence, and each of the EHT-STF field, the EHT-LTF field, and the data field may not be rotated in the n bandwidths of Y MHz by using the rotation factor sequence. Alternatively, each of all fields (namely, the L-STF field, the L-LTF field, the L-SIG field, the RL-SIG field, the U-SIG field, the EHT-SIG field, the EHT-STF field, the EHT-LTF field, and the data field) shown in FIG. 2 is rotated in the n bandwidths of Y MHz by using the rotation factor sequence.

In addition, a transmission mode of the some fields of the PPDU in the n bandwidths of Y MHz may be duplicate rotation transmission, and the some fields may include the L-STF, L-LTF, L-SIG, RL-SIG, U-SIG, and EHT SIG. Duplicate rotation transmission means that content of the L-STF, L-LTF, L-SIG, RL-SIG, U-SIG, and EHT-SIG transmitted in each bandwidth of Y MHz is the same, and the L-STF, L-LTF, L-SIG, RL-SIG, U-SIG, and EHT-SIG are rotated by a specific angle in different bandwidths of Y MHz.

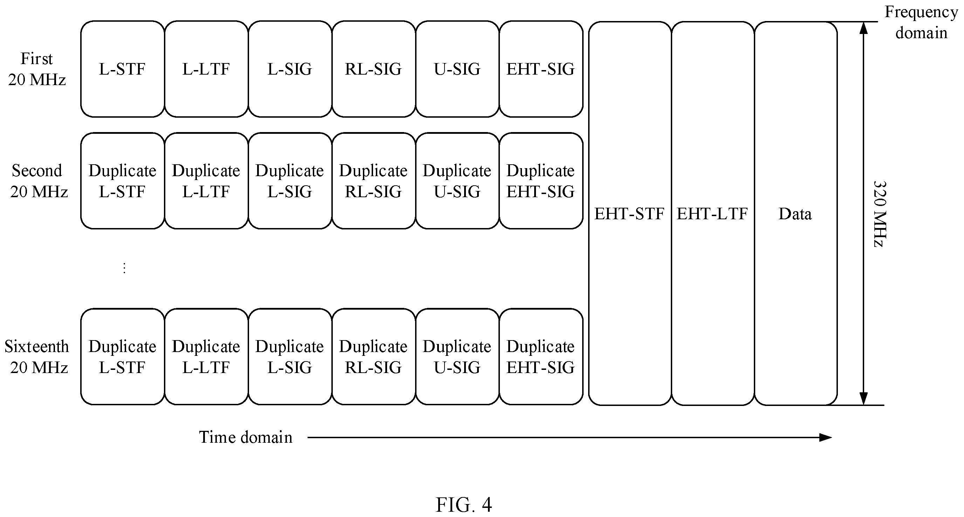

For ease of understanding, herein, the frame structure of the PPDU shown in FIG. 2 is used as an example to describe a field transmitted in a duplicate rotation mode and a field transmitted in a non-duplicate rotation mode that are in the PPDU with the bandwidth of X MHz. It is assumed that X=320 and Y=20, a transmission mode of the L-STF field, the L-LTF field, the L-SIG field, the RL-SIG field, the U-SIG field, and the EHT-SIG field in the PPDU is duplicate rotation transmission, and a transmission mode of the EHT-STF field, the EHT-LTF field, and the data field in the PPDU is non-duplicate rotation transmission. In this case, a PPDU with a bandwidth of 320 MHz may be shown in FIG. 4.

The PPDU may be an OFDMA PPDU, or may be a non-OFDMA PPDU. It should be noted that a field included in the next-generation PPDU does not constitute a limitation on an implementation of this application.

Specifically, when generating the PPDU with the bandwidth of X MHz, for some or all fields in the PPDU, the wireless communication device multiplies a frequency domain signal that is corresponding to the some or all fields and that is carried on each bandwidth of Y MHz by a rotation factor corresponding to the bandwidth of Y MHz, and performs inverse fast Fourier transform (inverse fast Fourier transform, IFFT) on a product, to obtain a time domain signal corresponding to the some or all fields.

For example, it is assumed that the frequency domain signals corresponding to the some or all fields are [Y1, Y2, ..., Yn], and the n rotation factors are [K1, K2, ..., Kn], where Y1 to Yn respectively represent the frequency domain signals corresponding to the n bandwidths of Y MHz, and K1 to Kn respectively represent rotation factors corresponding to the n bandwidths of Y MHz. In this case, the products of the frequency domain signals corresponding to the some or all fields and the rotation factor sequence may be represented as [Y1*K1, Y2*K2, ..., Yn*Kn], and the time-domain signals corresponding to the some or all fields may be represented as IFFT [Y1*K1, Y2*K2, ..., Yn*Kn].

Correspondingly, during calculation of a peak to average power ratio (peak to average power ratio, PAPR) of the some or all fields based on the time-domain signals corresponding to the some or all fields, oversampling may be performed on the time-domain signals corresponding to the some or all fields, to obtain analog domain signals. For example, five-times oversampling is performed. Assuming that a time-domain signal obtained by oversampling is $S_i$, a PAPR may be calculated according to the following formula (1). In the formula, max represents obtaining a maximum value, and mean represents an averaging operation.

$$PAPR = 10 \log_{10} \left( \frac{\max\left(S_i^2\right)}{mean\left(S_i^2\right)} \right) \quad (1)$$

Further, the PPDU with the bandwidth of X MHz includes a plurality of fields, and is transmitted on an X MHz channel including n bandwidths of Y MHz. At least some fields of a PPDU carried in n bandwidths of Y MHz are multiplied in a one-to-one correspondence by a rotation factor vector whose length is n in frequency domain, where at least some fields of a PPDU carried in each bandwidth of Y MHz are multiplied by a same coefficient of the rotation factor vector. In other words, data carried on all subcarriers included in the bandwidth of Y MHz is multiplied by the same coefficient. This reduces a PAPR of the at least some fields of the PPDU. Through computer simulation, it is learned that there is a very little difference between a PAPR obtained by multiplying a field by a rotation factor selected from any complex number and a PAPR obtained by multiplying the field by a rotation factor selected from a fixed set. To simplify implementation and reduce product implementation complexity, the fixed set to which the selected rotation factor belongs in this application is [1, -1, j, -j].

Further, each bandwidth of Y MHz may include a plurality of subcarriers. For example, when Y=20, each bandwidth of 20 MHz may include 64 subcarriers, 128 subcarriers, 256 subcarriers, or 512 subcarriers. When the wireless communication device generates the PPDU with the bandwidth of X MHz, an intermediate subcarrier in subcarriers at two sideband parts with the bandwidth of X MHz may carry no signal. In this way, adjacent-band interference and direct current interference can be avoided. To be compatible with a PPDU with a low bandwidth, each bandwidth of 20 MHz that carries a legacy preamble may alternatively include a sideband subcarrier, and carry no signal.

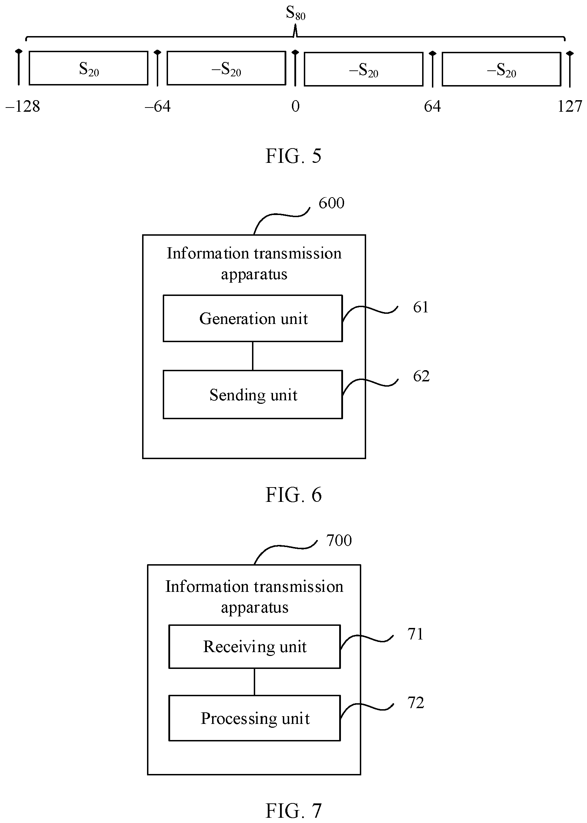

As shown in FIG. 5, an example in which a bandwidth of 80 MHz includes four bandwidths of 20 MHz and each bandwidth of 20 MHz includes 64 subcarriers is used herein. Sequence numbers of the subcarriers included in the bandwidth of 80 MHz may be represented as -128 to 127. In FIG. 5, subcarriers whose subcarrier sequence numbers are -128 to -123 and 123 to 127 are subcarriers at a sideband part, and three subcarriers whose subcarrier sequence numbers are -1 to 1 are intermediate subcarriers. In this case, no signal may be carried on the subcarriers whose subcarrier sequence numbers are -128 to -123, 123 to 127, and -1 to 1. Sequence numbers of sideband subcarriers on the bandwidth of 20 MHz are -32 to -27 and 27 to 31. It should be noted that in this embodiment of this application, only the bandwidth of 80 MHz is used as an example for description. A bandwidth of X MHz greater than 160 MHz may also be designed according to the foregoing manner used for the bandwidth of 80 MHz. This is not described again in this embodiment of this application.

Specifically, when generating the PPDU with the bandwidth of X MHz, the wireless communication device may obtain the rotation factor sequence of the PPDU through computer search. A plurality of rotation factor sequences may be obtained by inputting the bandwidth of X MHz of the PPDU and a quantity n of rotation factors. Further, a sum of PAPRs of the rotated fields corresponding to each rotation factor sequence may be obtained, and a rotation factor sequence corresponding to a smallest sum of PAPRs is selected as an optimal rotation factor sequence of the PPDU.

Further, in this embodiment of this application, when the X MHz is 240 MHz or 320 MHz, and Y=20 MHz, it may be considered that first four rotation factors in the rotation factor sequence are rotation factors corresponding to a current bandwidth of 80 MHz. In other words, the first four rotation factors in the rotation factor sequence are [1 -1 -1 -1]. When a computer searches for a rotation factor sequence of an X MHz PPDU based on the first four rotation factors in the rotation factor sequence, a search range can be narrowed down, and search efficiency can be improved.

Further, in this embodiment of this application, when the X MHz is 240 MHz or 320 MHz, and Y=20 MHz, it may further be considered that first eight rotation factors in the rotation factor sequence are rotation factors corresponding to a current bandwidth of 160 MHz. In other words, the first eight rotation factors in the rotation factor sequence are [1 -1 -1 1 1 -1 -1 -1]. When a computer searches for a rotation factor sequence of an X MHz PPDU based on the first eight rotation factors in the rotation factor sequence, a search range can be narrowed down, and search efficiency can be improved.

Step S302: The transmit device sends the PPDU with the bandwidth of X MHz.

After generating the PPDU with the bandwidth of X MHz, the transmit device may send the PPDU with the bandwidth of X MHz to another wireless communication device.

Correspondingly, a receive device receives the PPDU.

S303: The receive device performs rotation recovery on the PPDU based on the rotation factor sequence.

The receive device may perform corresponding rotation recovery on the received PPDU with the bandwidth of X MHz, to obtain the PPDU before rotation. Alternatively, a rotation factor is directly used as a part of a channel, and the rotation factor is removed through channel estimation and channel equalization.

Specifically, the receive device may also perform rotation recovery on each bandwidth of Y MHz by multiplying the bandwidth of Y MHz by a rotation factor. For example, when a rotation factor that is corresponding to the bandwidth of Y MHz and that is used on a transmit side is 1, the rotation factor used when the corresponding rotation recovery is performed on the receive side may be 1, or the receive side does not perform rotation recovery on a bandwidth of Y MHz corresponding to the rotation factor 1. When a rotation factor that is corresponding to the bandwidth of Y MHz and that is used on a transmit side is -1, the rotation factor used when the corresponding rotation recovery is performed on the receive side may be -1. When a rotation factor that is corresponding to the bandwidth of Y MHz and that is used on a transmit side is j, the rotation factor used when the corresponding rotation recovery is performed on the receive side may be j. When a rotation factor that is corresponding to the bandwidth of Y MHz and that is used on a transmit side is j, the rotation factor used when the corresponding rotation recovery is performed on the receive side may be -j.

For example, the following describes in detail a rotation factor sequence used when X=320 MHz by using (1) to (6).

It should be noted that, in rotation factor sequences shown in the following tables, a rotation angle corresponding to a rotation factor 1 is 0 degrees, a rotation angle corresponding to a rotation factor -1 is 180 degrees, a rotation angle corresponding to a rotation factor j is 90 degrees, and a rotation angle corresponding to a rotation factor -j is -90 degrees.

When X=320 MHz, a rotation angle sequence corresponding to a rotation factor sequence corresponding to 320 MHz is listed. To be specific, each rotation factor of the rotation factor sequence corresponding to 320 MHz is converted into a corresponding rotation angle, to obtain the corresponding rotation angle sequence.

When X=320 MHz, there are two PPDU transmission modes: transmission of a contiguous 320 MHz PPDU and transmission of a non-contiguous 160 MHz+160 MHz PPDU. For the non-contiguous 160 MHz+160 MHz PPDU, a rotation factor sequence of 160 MHz defined in an existing standard may be used, or a rotation factor sequence of 320 MHz provided in this embodiment of this application may be used. In other words, when the rotation factor of 320 MHz is designed in this embodiment of this application, PAPR performance of 160 MHz is also considered.

　　(1) X=320 MHz, cases of a full bandwidth and preamble puncturing are considered, and the PAPR performance of 160 MHz is considered.

When X=320, n=16, that is, a length of the rotation factor sequence is 16.

In a scenario, a bandwidth of 240 MHz in 802.11be may be obtained by puncturing a full bandwidth of 320 MHz. Therefore, when a rotation factor sequence is designed for the bandwidth of 320 MHz, PAPR performance of rotation factors of 240 MHz and 160 MHz may be considered. For example, when a rotation factor sequence of 320 MHz is designed, a case that needs to be considered is shown in the following Table 1-1:

**Table 1-1**

| Case 1 | 320 MHz [1 1 1 1 1 1 1 1 1 1 1 1 1 1 1 1] |
|--------|---------------------------------------------|
| Case 2 | 240 MHz [1 1 1 1 x x x x 1 1 1 1 1 1 1 1] |
| Case 3 | 240 MHz [1 1 1 1 1 1 1 1 x x x x 1 1 1 1] |
| Case 4 | 240 MHz [1 1 1 1 1 1 1 1 1 1 1 1 x x x x] |
| Case 5 | 240 MHz [x x x x 1 1 1 1 1 1 1 1 1 1 1 1] |
| Case 6 | 160 MHz [11 1 1 1 1 1 1 xxxx xxxx] |
| Case 7 | 160 MHz [xxxx xxxx 1111 1111] |

1 indicates that the 20 MHz is not punctured, and x indicates that the 20 MHz is punctured.

That PAPR performance of rotation factors of 240 MHz and 160 MHz is considered means that when the rotation factor sequence of the full-bandwidth (320 MHz) PPDU is designed, it also needs to be considered that the PAPRs of the rotation factor sequences of 240 MHz and 160 MHz are optimal. To be specific, a sum of PAPRs of fields obtained by rotating fields in a 240 MHz or 160 MHz PPDU by using the rotation factor sequence is the smallest. Herein, 160 MHz shown in Case 6 and Case 7 is used for constructing a non-contiguous 320 MHz PPDU.

Specifically, if a transmission mode of a non-contiguous 160 MHz+160 MHz PPDU is used in the bandwidth of 320 MHz, one 160 MHz PPDU shown in Case 6 and one 160 MHz PPDU shown in Case 7 may be used. When the rotation factor sequence of 320 MHz is designed, the following conditions need to be met: When first eight rotation factors in Case 6 are rotated, a sum of PAPRs of rotated fields is the smallest. When last eight rotation factors in Case 7 are rotated, a sum of PAPRs of rotated fields is the smallest. When 16 rotation factors obtained in Case 6+Case 7 are rotated, a sum of PAPRs of rotated fields is the smallest.

If the transmission mode of the non-contiguous 160 MHz+160 MHz PPDU is used in the bandwidth of 320 MHz, a rotation factor sequence of 160 MHz defined in an existing standard may alternatively be used. For example, a first 160 MHz segment uses a rotation factor of 160 MHz defined in the existing standard, and a second 160 MHz segment also uses a rotation factor of 160 MHz defined in the existing standard. When the first segment or a field in the first segment is rotated by using the rotation factor sequence of 160 MHz defined in the existing standard, a sum of PAPRs of rotated fields is the smallest.

In an implementation, the rotation factor of the bandwidth of 320 MHz may start with four rotation factors of an existing bandwidth of 80 MHz. To be specific, the rotation factor sequence of the bandwidth of 320 MHz is $[PR_{80}\ C_1\ C_2... C_{12}]$. $PR_{80}$ is a rotation factor [1 -1 -1 -1] of the existing bandwidth of 80 MHz, and $C_i$ belongs to a rotation factor candidate value [1 -1 j -j]. An optimal rotation factor sequence shown in Table 1-2 is obtained by using the foregoing computer search method.

**Table 1-2**

| No. | Sequence | Largest value of a sum of PAPRs of an L-STF and an L-LTF |
|---|---|---|
| 1 | [1 -1 -1 -1 j j j -1 j -1 -j 1 -j -1 j -j] | 13.3935 |
| 2 | [1 -1 -1 -1 -j -j -j -1 -j -1 j 1 j -1 -j j] | 13.3935 |

A rotation angle sequence corresponding to the sequence 1 is [0 180 180 180 90 90 90 180 90 180 -90 0 -90 180 90 -90], and a rotation angle sequence corresponding to the sequence 2 is [0 180 180 180 -90 -90 -90 180 -90 180 90 0 90 180 -90 90].

During specific implementation, starting from four rotation factors of the existing bandwidth of 80 MHz, all possible rotation factor sequences are searched by using the computer search method. Then, for each rotation factor sequence, a sum of maximum peak-to-average power ratios (MAX PAPR) that are of the L-STF and the L-LTF and that correspond to the seven cases in Table 1-1 is obtained, and a largest value (namely, a worst case) of the sum of MAX PAPRs is selected. Then, sums of MAX PAPRs of all rotation factor sequences are compared, and a sequence corresponding to a smallest sum of MAX PAPRs is selected as an optimal rotation factor sequence. As shown in Table 1-2, selected optimal rotation factor sequences are the sequence 1 and the sequence 2. When the sequence 1 is used, a PAPR of the L-STF is 6.2704, and a PAPR of the L-LTF is 7.1231, which are PAPRs obtained by using the sequence 1 in Case 7. In the sequence 2, a PAPR of the L-STF is 6.2704, and a PAPR of the L-LTF is 7.1231, which are PAPRs obtained by using the sequence 2 in Case 7. Certainly, another rotation factor sequence may be used. This is not limited in this application.

In another implementation, the rotation factor of the bandwidth of 320 MHz may start with eight rotation factors of an existing bandwidth of 160 MHz. To be specific, the rotation factor sequence of the bandwidth of 320 MHz is $[PR_{160}\ C_1\ C_2... C_8]$. $PR_{160}$ is a rotation factor [1 -1 -1 -1 1 -1 -1 -1] of the existing bandwidth of 160 MHz, and $C_i$ belongs to a rotation factor candidate value [1 -1 j -j]. An optimal rotation factor shown in Table 1-3 is obtained through computer search.

**Table 1-3**

| No. | Sequence | Largest value of a sum of PAPRs of an L-STF and an L-LTF |
|---|---|---|
| 1 | 1 -1 -1 -1 1 -1 -1 -1 -1 -1 1 1 -1 1 -1 j | 13.467372 |
| 2 | 1 -1 -1 -1 1 -1 -1 -1 -1 -1 1 1 -1 1 -1 -j | 13.467372 |
| 3 | 1 -1 -1 -1 1 -1 -1 -1 -1 j j -j -1 1 -j 1 | 13.799763 |
| 4 | 1 -1 -1 -1 1 -1 -1 -1 -1 -j -j j -1 1 j 1 | 13.799763 |
| 5 | 1 -1 -1 -1 1 -1 -1 -1 -1 -1 1 1 -1 1 j 1 | 13.818538 |
| 6 | 1 -1 -1 -1 1 -1 -1 -1 -1 -1 1 1 -1 1 -j 1 | 13.818538 |

A rotation angle sequence corresponding to the sequence 1 is [0 180 180 180 0 180 180 180 180 180 0 0 180 0 180 90], a rotation angle sequence corresponding to the sequence 2 is [0 180 180 180 0 180 180 180 180 180 0 0 180 0 180 -90], a rotation angle sequence corresponding to the sequence 3 is [0 180 180 180 0 180 180 180 180 90 90 -90 180 0 -90 0], a rotation angle sequence corresponding to the sequence 4 is [0 180 180 180 0 180 180 180 180 -90 -90 90 180 0 90 0], a rotation angle sequence corresponding to the sequence 5 is [0 180 180 180 0 180 180 180 180 180 0 0 180 0 90 0], and a rotation angle sequence corresponding to the sequence 6 is [0 180 180 180 0 180 180 180 180 180 0 0 180 0 -90 0].

During specific implementation, starting from eight rotation factors of the existing bandwidth of 160 MHz, all possible rotation factor sequences are searched by using the computer search method. Then, for each rotation factor sequence, a sum of maximum peak-to-average power ratios (MAX PAPR) that are of the L-STF and the L-LTF and that correspond to the seven cases in Table 1-1 is obtained, and a largest value (namely, a worst case) of the sum of MAX PAPRs is selected. Then, sums of MAX PAPRs of all rotation factor sequences are compared, and a sequence corresponding to a smallest sum of MAX PAPRs is selected as an optimal rotation factor sequence. As shown in Table 1-3, selected optimal rotation factor sequences are the sequence 1 to the sequence 6. Certainly, another rotation factor sequence may be used. This is not limited in this application.

In another scenario, when the rotation factor sequence is designed for the bandwidth of 320 MHz, preamble puncturing may not be considered, and only PAPR performance of a rotation factor of 160 MHz is considered. For example, there are several cases shown in the following Table 1-4:

**Table 1-4**

| Case 1 | 320 MHz [1 1 1 1 1 1 1 1 1 1 1 1 1 1 1 1] |
|---|---|
| Case 2 | 160 MHz [11 1 1 1 1 1 1 xxxx xxxx] |
| Case 3 | 160 MHz [xxxx xxxx 1111 1111] |

1 indicates that the 20 MHz is not punctured, and x indicates that the 20 MHz is punctured.

PAPR performance of each bandwidth of 160 MHz is also considered when a rotation factor sequence of a contiguous bandwidth of 320 MHz is designed.

In an implementation, the rotation factor of the bandwidth of 320 MHz starts with four rotation factors of an existing bandwidth of 80 MHz. To be specific, the rotation factor sequence is $[PR_{80}\ C_1\ C_2... C_{12}]$, where $PR_{80}$ is a rotation factor [1-1-1-1] of the existing bandwidth of 80 MHz, and Ci belongs to a rotation factor candidate value [1 -1 j -j]. An optimal rotation factor shown in Table 1-5 is obtained through computer search.

**Table 1-5**

| No. | Sequence | Largest value of a sum of PAPRs of an L-STF and an L-LTF |
|---|---|---|
| 1 | [1 -1 -1 -1 j j -j j -j j -j -j 1 1 1 -1] | 10.8632 |
| 2 | [1 -1 -1 -1 -i -i j -i j -i j j 1 1 1 -1] | 10.8632 |

During specific implementation, starting from four rotation factors of the existing bandwidth of 80 MHz, all possible rotation factor sequences are searched by using the computer search method. Then, for each rotation factor sequence, a sum of PAPRs that are of the L-STF and the L-LTF and that correspond to the three cases in Table 1-4 is obtained, and a largest value (namely, a worst case) of a sum of MAX PAPRs is selected. Then, sums of MAX PAPRs of all rotation factor sequences are compared, and a sequence corresponding to a smallest sum of MAX PAPRs is selected as an optimal rotation factor sequence. As shown in Table 1-5, selected optimal rotation factor sequences are the sequence 1 and the sequence 2. When the sequence 1 is used, a PAPR of the L-STF is 4.7126, and a PAPR of the L-LTF is 6.1506, which are PAPRs obtained by using the sequence 1 in Case 1. In the sequence 2, a PAPR of the L-STF is 4.7126, and a PAPR of the L-LTF is 6.1506, which are PAPRs obtained by using the sequence 2 in Case 1. Certainly, another rotation factor sequence may be used. This is not limited in this application.

In another implementation, the rotation factor of the bandwidth of 320 MHz may start with eight rotation factors of an existing bandwidth of 160 MHz. To be specific, the rotation factor sequence is $[PR_{160}\ C_1\ C_2... C_8]$, where $PR_{160}$ is a rotation factor [1 -1 -1 -1 1 -1 -1 -1] of the existing bandwidth of 160 MHz, and $C_i$ belongs to a rotation factor candidate value [1 -1 j -j]. An optimal rotation factor shown in Table 1-6 is obtained through computer search.

**Table 1-6**

| No. | Sequence | Largest value of a sum of PAPRs of an L-STF and an L-LTF |
|---|---|---|
| 1 | [1 -1 -1 -1 1 -1 -1 -1 1 -1 1 1 -1 -1 -1 -1] | 12.38595 |
| 2 | [1 -1 -1 -1 -1 1 -1 -1 -1 1 -1 j j -1 1 -j -j] | 12.38595 |
| 3 | [1 -1 -1 -1 1 -1 -1 -1 1 1 -1 -j -j -1 1 j j] | 12.38595 |
| 4 | [1 -1 -1 -1 1 -1 -1 -1 j j j 1 -1 -1 1 -1] | 12.38595 |
| 5 | [1 -1 -1 -1 1 -1 -1 -1 j -1 1 1 1 1 -1 j] | 12.38595 |
| 6 | [1 -1 -1 -1 1 -1 -1 -1 j -j 1 1 -j j -1 -1] | 12.38595 |
| 7 | [1 -1 -1 -1 1 -1 -1 -1 j -j -j j -j j j j] | 12.38595 |
| 8 | [1 -1 -1 -1 1 -1 -1 -1 -1 1 1 1 -1 1 -1 -1] | 12.38595 |
| 9 | [1 -1 -1 -1 1 -1 -1 -1 -1 1 1 -1 1 -1 -1 -1] | 12.38595 |
| 10 | [1 -1 -1 -1 1 -1 -1 -1 -1 j 1 1 j -1 1 -1] | 12.38595 |
| 11 | [1 -1 -1 -1 1 -1 -1 -1 -1 j -j 1 1 -j j -1] | 12.38595 |
| 12 | [1 -1 -1 -1 1 -1 -1 -1 -1 -1 -1 1 1 -1 1 -1] | 12.38595 |
| 13 | [1 -1 -1 -1 1 -1 -1 -1 -1 -1 -1 1 -1 1 1 -1] | 12.38595 |
| 14 | [1 -1 -1 -1 1 -1 -1 -1 -1 -j 1 1 -j 1 1 -1] | 12.38595 |
| 15 | [1 -1 -1 -1 1 -1 -1 -1 -1 -j j 1 1 j -j -1] | 12.38595 |
| 16 | [1 -1 -1 -1 1 -1 -1 -1 -j j 1 1 j -j -1 -1] | 12.38595 |
| 17 | [1 -1 -1 -1 1 -1 -1 -1 -j j j -j j -j -j -j] | 12.38595 |
| 18 | [1 -1 -1 -1 1 -1 -1 -1 -j -1 1 1 1 1 -1 -j] | 12.38595 |
| 19 | [1 -1 -1 -1 1 -1 -1 -1 j j j 1 -1 -1 1 -1] | 12.38595 |

During specific implementation, starting from eight rotation factors of the existing bandwidth of 160 MHz, all possible rotation factor sequences are searched by using the computer search method. Then, for each rotation factor sequence, a sum of PAPRs that are of the L-STF and the L-LTF and that correspond to the three cases in Table 1-4 is obtained, and a largest value (namely, a worst case) of a sum of MAX PAPRs is selected. Then, sums of MAX PAPRs of all rotation factor sequences are compared, and a sequence corresponding to a smallest sum of MAX PAPRs is selected as an optimal rotation factor sequence. As shown in Table 1-6, selected optimal rotation factor sequences are the sequence 1 to the sequence 19. Certainly, another rotation factor sequence may be used. This is not limited in this application.

(2) X=320 MHz, a full bandwidth is considered, and the PAPR performance of 160 MHz is not considered. A design of a rotation factor of 160 MHz is not considered. In this case, a rotation factor value in an existing bandwidth of 160 MHz may be used for non-contiguous 320 MHz transmission.

In a scenario, a bandwidth of 240 MHz in 802.11be may be obtained by puncturing a full bandwidth of 320 MHz. Therefore, when a rotation factor sequence is designed for the bandwidth of 320 MHz, PAPR performance of a rotation factor of 240 MHz may be considered. For example, when a rotation factor sequence of 320 MHz is designed, a case that needs to be considered is shown in the following Table 2-1:

**Table 2-1**

| Case 1 | 320 MHz [1 1 1 1 1 1 1 1 1 1 1 1 1 1 1 1] |
|---|---|
| Case 2 | 240 MHz [1 1 1 1 x x x x 1 1 1 1 1 1 1 1] |
| Case 3 | 240 MHz [1 1 1 1 1 1 1 1 x x x x 1 1 1 1] |
| Case 4 | 240 MHz [1 1 1 1 1 1 1 1 1 1 1 1 x x x x] |
| Case 5 | 240 MHz [x x x x 1 1 1 1 1 1 1 1 1 1 1 1] |

1 indicates that the 20 MHz is not punctured, and x indicates that the 20 MHz is punctured.

In an implementation, the rotation factor of the bandwidth of 320 MHz may start with four rotation factors of an existing bandwidth of 80 MHz. To be specific, the rotation factor sequence is [PR$_{80}$ C$_1$ C$_2$... C$_{12}$], where PR$_{80}$ is a rotation factor [1 -1 -1 -1] of the existing bandwidth of 80 MHz, and Ci belongs to a rotation factor candidate value [1 -1 j -j]. An optimal rotation factor sequence shown in Table 2-2 is obtained through computer search.

**Table 2-2**

| No. | Sequence | Largest value of a sum of PAPRs of an L-STF and an L-LTF |
|-----|----------|----------------------------------------------------------|
| 1 | [1 -1 -1 -1 j -1 1 j j1 -1j -1-1-1 1] | 12.9896 |
| 2 | [1 -1 -1 -1 -j -1 1 -j-j 1 -1 -j-1 -1 -1 1] | 12.9896 |

Specifically, for the five cases in Table 2-1, a sum of PAPRs that are of the L-STF and the L-LTF and that are obtained by using all rotation factor sequences obtained through computer search is calculated, and a largest value of the sum of PAPRs of the L-STF and the L-LTF in the five cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 2-2. A largest value of a sum of PAPRs of the L-STF and the L-LTF that correspond to the sequence 1 is a sum of PAPRs of the L-STF and the L-LTF when the sequence 1 is used in Case 1. Specifically, the PAPR of the L-STF is 5.9662, and the PAPR of the L-LTF is 7.0234. A largest value of a sum of PAPRs of the L-STF and the L-LTF that correspond to the sequence 2 is a sum of PAPRs of the L-STF and the L-LTF when the sequence 2 is used in Case 2. Specifically, the PAPR of the L-STF is 5.9662, and the PAPR of the L-LTF is 7.0234.

If PAPR performance of the L-SIG field is further considered, an alternative rotation factor sequence is shown in Table 2-3.

**Table 2-3**

| No. | Sequence | Largest value of a sum of PAPRs of an L-STF and an L-LTF |
|-----|----------|----------------------------------------------------------|
| 1 | [1 -1 -1 -1 1 j -j 1 -1 j -j -1 1 1 1-1] | 13.10867 |
| 2 | [1 -1 -1 -1 1 1 -1 -1 -1 -1 -1 1 1 -1 1 -1 jj] | 13.27865 |
| 3 | [1 -1 -1 -1 1 -1 -1 -1 -1 -1 1 1-1 1 -1 -jj] | 13.27865 |
| 4 | [1 -1 -1 -1 1 -j j 1 -1 -j j -1 1 1 1-1] | 13.10867 |
| 5 | [1 -1 -1 -1 j j 1 -1 -1 1 1 -1 -j j -1 -1 -jj] | 13.43929 |
| 6 | [1 -1 -1 -1 j j j -1 j-1 -j 1 -j -1 j-j] | 13.31821 |
| 7 | [1 -1 -1 -1 j j j -1 -j j j 1 -j -1 1 -j] | 13.28926 |
| 8 | [1 -1 -1 -1 j j -1j-1 -j -jj j 1 -1 -j j] | 13.40421 |
| 9 | [1 -1 -1 -1 j j -1 j -j -j -1 1 -1 -j -jj] | 13.40835 |
| 10 | [1 -1 -1 -1 j j -1 -1 -j 1 -1 1 -j -1 -jj] | 13.32164 |
| 11 | [1 -1 -1 -1 j j -1 1 -j 1 j 1 1 -j 1] | 13.22824 |
| 12 | [1 -1 -1 -1 j -1 1 j j 1 -1 j j -1 -1 1] | 13.42756 |
| 13 | [1 -1 -1 -1 j -1 1 j j 1 -1 j -1 -1 -1 1] | 12.98959 |
| 14 | [1 -1 -1 -1 j -1 j -1 j -1 -j 1 -jj 1 -j] | 13.35957 |
| 15 | [1 -1 -1 -1 j -1 -jj j -jj -1 -1 -j -1 j 1] | 13.45843 |
| 16 | [1 -1 -1 -1 j -j -1 1 1 1 j -j 1 j 1 1] | 13.22785 |
| 17 | [1 -1 -1 -1 j -j -1 -1 j -1 1 j 1 -1 -1 -jj] | 13.22433 |
| 18 | [1 -1 -1 -1 -1 1 1 1-1 1 1 j 1 1 -1 1] | 13.47008 |
| 19 | [1-1-1-1 1 1 1-1 1 1 -j 1 1-1 1] | 13.47008 |
| 20 | [1 -1 -1 -1 -jj -1 1 1 1 1 -jj 1 -j 1 1] | 13.22785 |

(continued)

| No. | Sequence | Largest value of a sum of PAPRs of an L-STF and an L-LTF |
|---|---|---|
| 21 | [1-1 -1 -1 -j j -1 -1 -j -1 1 -j 1 -1 -1 j] | 13.22433 |
| 22 | [1 -1 -1 -1 -j -1 1 -j -j 1 -1 -j -1 -1 -1 1] | 12.98959 |
| 23 | [1-1-1-1-j -1 1 -j -j 1 -1 -j -j -1 -1 1] | 13.42756 |
| 24 | [1 -1 -1 -1 -j -1j-j j -j -1 -1 j -1 -j 1] | 13.45843 |
| 25 | [1 -1 -1 -1 -j -1 -j -1 -j -1 j1 j -j 1 j] | 13.35957 |
| 26 | [1 -1 -1 -1 j j 1 -1 -1 1 -1 j -j -1 -1 j] | 13.43929 |
| 27 | [1 -1 -1 -1 -j -j j -1 1 j 1 -j 1 1 j 1] | 13.22824 |
| 28 | [1-1-1-1 j j -1-1 j 1-1 1 j -1 j -j] | 13.32164 |
| 29 | [1 -1 -1 -1 -j -j -j -1 -jj j -1 1 -jj j -j] | 13.40835 |
| 30 | [1 -1 -1 -1 -j -j -1 -j -1 j j -j 1-1 j -j] | 13.40421 |
| 31 | [1 -1 -1 -1 -j -j -j -1 j -jj 1 j -1 1 j] | 13.28926 |
| 32 | [1 -1 -1 -1 -j -j -j -1 -j -1 1 1 j -1 -j j] | 13.31821 |

In another implementation, the rotation factor of the bandwidth of 320 MHz may start with eight rotation factors of an existing bandwidth of 160 MHz. To be specific, the rotation factor sequence is $[PR_{160} C_1 C_2... Cs]$, where $PR_{160}$ is a rotation factor [1 -1 -1 -1 1 -1 -1 -1] of the existing bandwidth of 160 MHz, and $C_i$ belongs to a rotation factor candidate value [1 -1 j -j]. An optimal rotation factor sequence shown in Table 2-4 is obtained through computer search.

**Table 2-4**

| No. | Sequence | Largest value of a sum of PAPRs of an L-STF and an L-LTF |
|---|---|---|
| 1 | [1 -1 -1 -1 1 -1 -1 -1 -1 j 1 -1 -1 1 -1 -j] | 13.657 |
| 2 | [1 -1 -1 -1 1 -1 -1 -1 -1 -1 1 1 -1 1 -1 j] | 13.27865 |
| 3 | [1 -1 -1 -1 1 -1 -1 -1 -1 1 1-1 1 -1 -j] | 13.27865 |
| 4 | [1 -1 -1 -1 1 -1 -1 -1 -1 -j 1 -1 -1 1 -1 j] | 13.657 |

MAX PAPRs corresponding to the sequence 2 and the sequence 3 are the smallest. Therefore, the sequence 2 and the sequence 3 are optimal rotation factor sequences.

In still another scenario, only PAPR performance of contiguous 320 MHz is considered, in other words, only a case of [1 1 1 1 1 1 1 1 1 1 1 1 1 1 1 1] is considered.

In an implementation, the rotation factor of the bandwidth of 320 MHz starts with four rotation factors of an existing bandwidth of 80 MHz. To be specific, the rotation factor sequence is $[PR_{80} C_1 C_2... C_{12]}$, where $PR_{80}$ is a rotation factor [1-1-1-1] of the existing bandwidth of 80 MHz, and Ci belongs to a rotation factor candidate value [1 -1 j -j]. An optimal rotation factor shown in Table 2-5 is obtained through computer search.

**Table 2-5**

| No. | Sequence | Largest value of a sum of PAPRs of an L-STF and an L-LTF |
|---|---|---|
| 1 | [1 -1 -1 -1 1 1 -1 -1 -1 -1 -1 -1 1 1 -1 1 1] | 9.9112 |
| 2 | [1 -1 -1 -1 1 1 -1 -1 -1 1 -1 1 1 -1 1 -1 -1] | 9.9936 |
| 3 | [1 -1 -1 -1 -1 1 1 1 1 -1 1 1 1 -1 1 1] | 9.9907 |
| 4 | [1 -1 -1 -1 -1 1 -1 1 -1 1 1 -1 -1 1 1 -1 -1] | 9.88933 |

When the sequence 1 is used, a PAPR of the L-STF is 4.4945, and a PAPR of the L-LTF is 5.4167. When the sequence 2 is used, a PAPR of the L-STF is 4.4722, and a PAPR of the L-LTF is 5.5214. When the sequence 3 is used, a PAPR of the L-STF is 4.4558, and a PAPR of the L-LTF is 5.5349. When the sequence 4 is used, a PAPR of the L-STF is 4.5573, and a PAPR of the L-LTF is 5.4336.

A MAX PAPR corresponding to the sequence 4 is the smallest. Therefore, the sequence 4 is an optimal rotation factor sequence.

In another implementation, the rotation factor of the bandwidth of 320 MHz may start with eight rotation factors of an existing bandwidth of 160 MHz. To be specific, the rotation factor sequence is $[PR_{160}\ C_1\ C_2...\ C_8]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 2-6 is obtained through computer search.

**Table 2-6**

| No. | Sequence | Largest value of a sum of PAPRs of an L-STF and an L-LTF |
|-----|----------|----------------------------------------------------------|
| 1 | [1 -1 -1 -1 1 -1 -1 -1 1 -1 1 1 -1 1 -1 -1] | 9.993589 |

Specifically, for a case of contiguous bandwidth of 320 MHz, a sum of PAPRs that are of the L-STF and the L-LTF and that are obtained by using all rotation factor sequences obtained through computer search is calculated, and a rotation factor sequence corresponding to a smallest value of the sum of PAPRs of the L-STF and the L-LTF is used as an optimal selection factor sequence, namely, the sequence 1 shown in Table 2-6.

(3) X=320 MHz, a case of preamble puncturing is considered, a full bandwidth is not considered, and a design of a rotation factor of 160 MHz is not considered. There are several cases shown in the following Table 3-1:

**Table 3-1**

| Case 1 | 280 MHz [x x 1 1 1 1 1 1 1 1 1 1 1 1] |
|--------|-----------------------------------------|
| Case 2 | 280 MHz [1 1 x x 1 1 1 1 1 1 1 1 1 1] |
| Case 3 | 280 MHz [1 1 1 1 x x 1 1 1 1 1 1 1 1] |
| Case 4 | 280 MHz [1 1 1 1 1 1 x x 1 1 1 1 1 1] |
| Case 5 | 280 MHz [1 1 1 1 1 1 1 1 x x 1 1 1 1] |
| Case 6 | 280 MHz [1 1 1 1 1 1 1 1 1 1 x x 1 1] |
| Case 7 | 280 MHz [1 1 1 1 1 1 1 1 1 1 1 1 x x 1 1] |
| Case 8 | 280 MHz [1 1 1 1 1 1 1 1 1 1 1 1 1 1 x x] |
| Case 9 | 240 MHz [1 1 1 1 x x x x 1 1 1 1 1 1] |
| Case 10 | 240 MHz [1 1 1 1 1 1 1 1 x x x x 1 1 1] |
| Case 11 | 240 MHz [1 1 1 1 1 1 1 1 1 1 1 1 x x x x] |
| Case 12 | 240 MHz [x x x x 1 1 1 1 1 1 1 1 1 1] |

1 indicates that the 20 MHz is not punctured, and x indicates that the 20 MHz is punctured.

In an implementation, the rotation factor of the bandwidth of 320 MHz may start with four rotation factors of an existing bandwidth of 80 MHz. To be specific, the rotation factor sequence is $[PR_{80}\ C_1\ C_2...\ C_{12}]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 3-2 is obtained through computer search.

**Table 3-2**

| No. | Sequence | Largest value of a sum of PAPRs of an L-STF and an L-LTF |
|-----|----------|----------------------------------------------------------|
| 1 | [1 -1 -1 -1 j j j -1 j -1 -j j -j j 1 -j] | 14.21612 |
| 2 | [1 -1 -1 -1 -j -j -j -1 -j -1 j -j -j -j 1 j] | 14.21612 |

Specifically, for the 12 cases in Table 3-1, a sum of PAPRs that are of the L-STF and the L-LTF and that are obtained by using all rotation factor sequences obtained through computer search is calculated, and a largest value of the sum of PAPRs of the L-STF and the L-LTF in the 12 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 3-2. A largest value of a sum of PAPRs of the L-STF and the L-LTF that correspond to the sequence 1 is a sum of PAPRs of the L-STF and the L-LTF when the sequence 1 is used in Case 4/Case 5. Specifically, the PAPR of the L-STF is 6.6412, and the PAPR of the L-LTF is 7.5520. A largest value of a sum of PAPRs of the L-STF and the L-LTF that correspond to the sequence 2 is a sum of PAPRs of the L-STF and the L-LTF when the sequence 2 is used in Case 4/Case 5. Specifically, the PAPR of the L-STF is 6.6412, and the PAPR of the L-LTF is 7.5520.

In another implementation, the rotation factor of the bandwidth of 320 MHz may start with eight rotation factors of an existing bandwidth of 160 MHz. To be specific, the rotation factor sequence is $[PR_{160} \, C_1 \, C_2... \, C_8]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 3-3 is obtained through computer search.

**Table 3-3**

| No. | Sequence | Largest value of a sum of PAPRs of an L-STF and an L-LTF |
|---|---|---|
| 1 | [1 -1 -1 -1 1 -1 -1 -1 -1 -1 -1 1 -1 1 1 -1] | 15.1432 |

Specifically, for the 12 cases in Table 3-1, a sum of PAPRs that are of the L-STF and the L-LTF and that are obtained by using all rotation factor sequences obtained through computer search is calculated, and a largest value of the sum of PAPRs of the L-STF and the L-LTF in the 12 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 3-3. A largest value of a sum of PAPRs of the L-STF and the L-LTF that correspond to the sequence 1 is a sum of PAPRs of the L-STF and the L-LTF when the sequence 1 is used in Case 10. Specifically, the PAPR of the L-STF is 7.2495, and the PAPR of the L-LTF is 7.8937.

In still another implementation, for the rotation factor sequence of 320 MHz, an existing rotation factor of a bandwidth of 160 MHz or an existing rotation factor of a bandwidth of 80 MHz may alternatively be considered. Specifically, the rotation factor sequence of 320 MHz may be in the following form: $[PR_{80} \, C_1 PR_{80} \, C_2 PR_{80} \, C_3 PR_{80}]$, or $[PR_{160} \, C_1 PR_{160}]$. $PR_{160}$ is a rotation factor [1 -1 -1 -1 1 -1 -1 -1] of the existing bandwidth of 160 MHz, and $PR_{80}$ is a rotation factor [1 -1 -1 -1] of the existing bandwidth of 80 MHz. $CiPR_{80}$ means that each $PR_{80}$ rotation factor is rotated by Ci, and $CiPR_{160}$ means that each $PR_{160}$ rotation factor is rotated by Ci. Herein, Ci may be 1, -1, j, or -j. In this case, a specific sequence obtained is shown in Table 3-4.

**Table 3-4**

| Sequence obtaining method | Sequence | Largest value of a sum of PAPRs of an L-STF and an L-LTF |
|---|---|---|
| $[PR_{80} \, C_1 \, PR_{80} \, C_2 \, PR_{80} \, C_3 \, PR_{80}]$ | [1 -1 -1 -1 1 -1 -1 -1 -1 1 1 1 -1 1 1 1 1] | 16.7387 |
| $[PR_{160} \, C_1 \, PR_{160}]$ | | |

Specifically, for the 12 cases in Table 3-1, a sum of PAPRs that are of the L-STF and the L-LTF and that are obtained by using all rotation factor sequences obtained through computer search is calculated, and a largest value of the sum of PAPRs of the L-STF and the L-LTF in the 12 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 3-4. A largest value of a sum of PAPRs of the L-STF and the L-LTF that correspond to the sequence is a sum of PAPRs of the L-STF and the L-LTF when the sequence is used in Case 5. Specifically, the PAPR of the L-STF is 8.1034, and the PAPR of the L-LTF is 8.6353.

(4) X=320 MHz, a case of preamble puncturing is considered, a full bandwidth is not considered, and a design of a rotation factor of 160 MHz is considered. There are several cases shown in the following Table 4-1:

**Table 4-1**

| Case 1 | 280 MHz [x x 1 1 1 1 1 1 1 1 1 1 1 1 1 1] |
|---|---|
| Case 2 | 280 MHz [1 1 x x 1 1 1 1 1 1 1 1 1 1 1 1] |
| Case 3 | 280 MHz [1 1 1 1 x x 1 1 1 1 1 1 1 1 1 1] |

(continued)

| Case 4 | 280 MHz [1 1 1 1 1 1 x x 1 1 1 1 1 1 1 1] |
| Case 5 | 280 MHz [1 1 1 1 1 1 1 1 x x 1 1 1 1 1 1] |
| Case 6 | 280 MHz [1 1 1 1 1 1 1 1 1 1 x x 1 1 1 1] |
| Case 7 | 280 MHz [1 1 1 1 1 1 1 1 1 1 1 1 x x 1 1] |
| Case 8 | 280 MHz [1 1 1 1 1 1 1 1 1 1 1 1 1 1 x x] |
| Case 9 | 240 MHz [1 1 1 1 x x x x 1 1 1 1 1 1 1 1] |
| Case 10 | 240 MHz [1 1 1 1 1 1 1 1 x x x x 1 1 1 1] |
| Case 11 | 240 MHz [1 1 1 1 1 1 1 1 1 1 1 1 x x x x] |
| Case 12 | 240 MHz [x x x x 1 1 1 1 1 1 1 1 1 1 1 1] |
| Case 13 | 160 MHz [1 1 1 1 1 1 1 1 x x x x x x x x] |
| Case 14 | 160 MHz [x x x x x x x x 1 1 1 1 1 1 1 1] |

1 indicates that the 20 MHz is not punctured, and x indicates that the 20 MHz is punctured.

In an implementation, the rotation factor of the bandwidth of 320 MHz may start with four rotation factors of an existing bandwidth of 80 MHz. To be specific, the rotation factor sequence is $[PR_{80}\, C_1\, C_2... C_{12}]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 4-2 is obtained through computer search.

**Table 4-2**

| No. | Sequence | Largest value of a sum of PAPRs of an L-STF and an L-LTF |
|---|---|---|
| 1 | [1 -1 -1 -1 -1 -1 -1 1 1 1 -1 1 -1 1 1 -1] | 14.551 |

Specifically, for the 14 cases in Table 4-1, a sum of PAPRs that are of the L-STF and the L-LTF and that are obtained by using all rotation factor sequences obtained through computer search is calculated, and a largest value of the sum of PAPRs of the L-STF and the L-LTF in the 14 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 4-2. A largest value of a sum of PAPRs of the L-STF and the L-LTF that correspond to the sequence 1 is a sum of PAPRs of the L-STF and the L-LTF when the sequence 1 is used in Case 14. Specifically, the PAPR of the L-STF is 6.7948, and the PAPR of the L-LTF is 7.7562.

In another implementation, in consideration of station compatibility of an existing mandatory bandwidth of 160 MHz in 802.11ac and 802.11 ax, the rotation factor of the bandwidth of 320 MHz starts with eight rotation factors of an existing bandwidth of 160 MHz. To be specific, the rotation factor sequence is $[PR_{160}\, C_1\, C_2... C_8]$, where $PR_{160}$ is a rotation factor [1 -1 -1 -1 1 -1 -1 -1] of the existing bandwidth of 160 MHz, and $C_i$ belongs to a rotation factor candidate value [1 -1 j -j]. An optimal rotation factor shown in Table 4-3 is obtained through computer search.

**Table 4-3**

| No. | Sequence | Largest value of a sum of PAPRs of an L-STF and an L-LTF |
|---|---|---|
| 1 | [1 -1 -1 -1 1 -1 -1 -1 -1 -1 -1 1 -1 1 1 -1] | 15.1432 |

Specifically, for the 14 cases in Table 4-1, a sum of PAPRs that are of the L-STF and the L-LTF and that are obtained by using all rotation factor sequences obtained through computer search is calculated, and a largest value of the sum of PAPRs of the L-STF and the L-LTF in the 14 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 4-3. A largest value of a sum of PAPRs of the L-STF and the L-LTF that correspond to the sequence 1 is a sum of PAPRs of the L-STF and the L-LTF when the sequence 1 is used in Case 10. Specifically, the PAPR of the L-STF is 7.2495, and the PAPR of the L-LTF is 7.8937.

In still another implementation, for the rotation factor sequence of 320 MHz, an existing rotation factor of a bandwidth of 160 MHz or an existing rotation factor of a bandwidth of 80 MHz may alternatively be considered. Specifically, the rotation factor sequence of 320 MHz may be in the following form: $[PR_{80} CiPR_{80} C_2PR_{80} C_3PR_{80}]$, or $[PR_{160} C_1PR_{160}]$. $PR_{160}$ is a rotation factor [1 -1 -1 -1 1 -1 -1 -1] of the existing bandwidth of 160 MHz, and $PR_{80}$ is a rotation factor [1 -1 -1 -1] of the existing bandwidth of 80 MHz. $CiPR_{80}$ means that each $PR_{80}$ rotation factor is rotated by Ci, and $CiPR_{160}$ means that each $PR_{160}$ rotation factor is rotated by Ci. Herein, Ci may be 1, -1, j, or -j. In this case, a specific sequence obtained is shown in Table 4-4.

Specifically, for the 14 cases in Table 4-1, a sum of PAPRs that are of the L-STF and the L-LTF and that are obtained by using all rotation factor sequences obtained through computer search is calculated, and a largest value of the sum of PAPRs of the L-STF and the L-LTF in the 14 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 4-4. A largest value of a sum of PAPRs of the L-STF and the L-LTF that correspond to the sequence is a sum of PAPRs of the L-STF and the L-LTF when the sequence is used in Case 5. Specifically, the PAPR of the L-STF is 8.1034, and the PAPR of the L-LTF is 8.6353.

**Table 4-4**

| Sequence obtaining method | Sequence | Largest value of a sum of PAPRs of an L-STF and an L-LTF |
|---|---|---|
| $[PR_{80} C_1 PR_{80} C_2 PR_{80} C_3 PR_{80}]$ | [1-1-1-1 1-1-1-1 -1 1 1 1 -1 1 1 1 ] | 16.7387 |
| $[PR_{160} C_1 PR_{160}]$ | | |

(5) X=320 MHz, cases of a full bandwidth and preamble puncturing are considered, and a design of a rotation factor of 160 MHz is considered. There are several cases shown in the following Table 5-1:

**Table 5-1**

| Case 1 | 320 MHz [1 1 1 1 1 1 1 1 1 1 1 1 1 1 1 1] |
|---|---|
| Case 2 | 280 MHz [x x 1 1 1 1 1 1 1 1 1 1 1 1 1 1] |
| Case 3 | 280 MHz [1 1 x x 1 1 1 1 1 1 1 1 1 1 1 1] |
| Case 4 | 280 MHz [1 1 1 1 x x 1 1 1 1 1 1 1 1 1 1] |
| Case 5 | 280 MHz [1 1 1 1 1 1 x x 1 1 1 1 1 1 1 1] |
| Case 6 | 280 MHz [1 1 1 1 1 1 1 1 x x 1 1 1 1 1 1] |
| Case 7 | 280 MHz [1 1 1 1 1 1 1 1 1 1 x x 1 1 1 1] |
| Case 8 | 280 MHz [1 1 1 1 1 1 1 1 1 1 1 1 x x 1 1] |
| Case 9 | 280 MHz [1 1 1 1 1 1 1 1 1 1 1 1 1 1 x x] |
| Case 10 | 240 MHz [1 1 1 1 x x x x 1 1 1 1 1 1 1 1] |
| Case 11 | 240 MHz [1 1 1 1 1 1 1 1 x x x x 1 1 1 1] |
| Case 12 | 240 MHz [1 1 1 1 1 1 1 1 1 1 1 1 x x x x] |
| Case 13 | 240 MHz [x x x x 1 1 1 1 1 1 1 1 1 1 1 1] |
| Case 14 | 160 MHz [1 1 1 1 1 1 1 1 x x x x x x x x] |
| Case 15 | 160 MHz [x x x x x x x x 1 1 1 1 1 1 1 1] |

1 indicates that the 20 MHz is not punctured, and x indicates that the 20 MHz is punctured.

In an implementation, the rotation factor of the bandwidth of 320 MHz starts with four rotation factors of an existing bandwidth of 80 MHz. To be specific, the rotation factor sequence is $[PR_{80} C_1 C_2... C_{12}]$, where $PR_{80}$ is a rotation factor [1-1-1-1] of the existing bandwidth of 80 MHz, and Ci belongs to a rotation factor candidate value [1 -1 j -j]. An optimal rotation factor shown in Table 5-2 is obtained through computer search.

**Table 5-2**

| No. | Sequence | Largest value of a sum of PAPRs of an L-STF and an L-LTF |
|---|---|---|
| 1 | [1 -1 -1 -1 -1 -1 -1 1 1 1 -1 1 -1 1 1 -1] | 14.551 |

Specifically, for the 15 cases in Table 5-1, a sum of PAPRs that are of the L-STF and the L-LTF and that are obtained by using all rotation factor sequences obtained through computer search is calculated, and a largest value of the sum of PAPRs of the L-STF and the L-LTF in the 15 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 5-2. A largest value of a sum of PAPRs of the L-STF and the L-LTF that correspond to the sequence 1 is a sum of PAPRs of the L-STF and the L-LTF when the sequence 1 is used in Case 15. Specifically, the PAPR of the L-STF is 6.7948, and the PAPR of the L-LTF is 7.7562.

In another implementation, the rotation factor of the bandwidth of 320 MHz may start with eight rotation factors of an existing bandwidth of 160 MHz. To be specific, the rotation factor sequence is $[PR_{160} C_1 C_2... C_8]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 5-3 is obtained through computer search.

**Table 5-3**

| No. | Sequence | Largest value of a sum of PAPRs of an L-STF and an L-LTF |
|---|---|---|
| 1 | [1 -1 -1 -1 1 -1 -1 -1 -1 -1 -1 1 -1 1 1 -1] | 15.1432 |

Specifically, for the 15 cases in Table 5-1, a sum of PAPRs that are of the L-STF and the L-LTF and that are obtained by using all rotation factor sequences obtained through computer search is calculated, and a largest value of the sum of PAPRs of the L-STF and the L-LTF in the 15 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 5-3. A largest value of a sum of PAPRs of the L-STF and the L-LTF that correspond to the sequence 1 is a sum of PAPRs of the L-STF and the L-LTF when the sequence 1 is used in Case 11. Specifically, the PAPR of the L-STF is 7.2495, and the PAPR of the L-LTF is 7.8937.

In still another implementation, for the rotation factor sequence of 320 MHz, an existing rotation factor of a bandwidth of 160 MHz or an existing rotation factor of a bandwidth of 80 MHz may alternatively be considered. Specifically, the rotation factor sequence of 320 MHz may be in the following form: $[PR_{80} C_i PR_{80} C_2 PR_{80} C_3 PR_{80}]$, or $[PR_{160} C_1 PR_{160}]$. $PR_{160}$ is a rotation factor [1 -1 -1 -1 1 -1 -1 -1] of the existing bandwidth of 160 MHz, and $PR_{80}$ is a rotation factor [1 -1 -1 -1] of the existing bandwidth of 80 MHz. $C_i PR_{80}$ means that each $PR_{80}$ rotation factor is rotated by Ci, and $C_i PR_{160}$ means that each $PR_{160}$ rotation factor is rotated by Ci. Herein, Ci may be 1, -1, j, or -j. In this case, a specific sequence obtained is shown in Table 5-4.

**Table 5-4**

| Sequence obtaining method | Sequence | Largest value of a sum of PAPRs of an L-STF and an L-LTF |
|---|---|---|
| $[PR_{80} C_1 PR_{80} C_2 PR_{80} C_3 PR_{80}]$ | [1 -1 -1 -1 1 -1 -1 -1 -1 1 1 1 -1 1 1 1] | 16.7387 |
| $[PR_{160} C_1 PR_{160}]$ | | |

Specifically, for the 15 cases in Table 5-1, a sum of PAPRs that are of the L-STF and the L-LTF and that are obtained by using all rotation factor sequences obtained through computer search is calculated, and a largest value of the sum of PAPRs of the L-STF and the L-LTF in the 15 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 5-4. A largest value of a sum of PAPRs of the L-STF and the L-LTF that correspond to the sequence is a sum of PAPRs of the L-STF and the L-LTF when the sequence is used in Case 6. Specifically, the PAPR of the L-STF is 8.1034, and the PAPR of the L-LTF is 8.6353.

(6) X=320 MHz, cases of a full bandwidth and preamble puncturing are considered, and a design of a rotation factor of 160 MHz is not considered. There are several cases shown in the following Table 6-1:

**Table 6-1**

| Case 1 | 320 MHz [1 1 1 1 1 1 1 1 1 1 1 1 1 1 1 1] |
|--------|-------------------------------------------|
| Case 2 | 280 MHz [x x 1 1 1 1 1 1 1 1 1 1 1 1 1 1] |
| Case 3 | 280 MHz [1 1 x x 1 1 1 1 1 1 1 1 1 1 1 1] |
| Case 4 | 280 MHz [1 1 1 1 x x 1 1 1 1 1 1 1 1 1 1] |
| Case 5 | 280 MHz [1 1 1 1 1 1 x x 1 1 1 1 1 1 1 1] |
| Case 6 | 280 MHz [1 1 1 1 1 1 1 1 x x 1 1 1 1 1 1] |
| Case 7 | 280 MHz [1 1 1 1 1 1 1 1 1 1 x x 1 1 1 1] |
| Case 8 | 280 MHz [1 1 1 1 1 1 1 1 1 1 1 1 x x 1 1] |
| Case 9 | 280 MHz [1 1 1 1 1 1 1 1 1 1 1 1 1 1 x x] |
| Case 10 | 240 MHz [1 1 1 1 x x x x 1 1 1 1 1 1 1 1] |
| Case 11 | 240 MHz [1 1 1 1 1 1 1 1 x x x x 1 1 1 1] |
| Case 12 | 240 MHz [1 1 1 1 1 1 1 1 1 1 1 1 x x x x] |
| Case 13 | 240 MHz [x x x x 1 1 1 1 1 1 1 1 1 1 1 1] |

1 indicates that the 20 MHz is not punctured, and x indicates that the 20 MHz is punctured.

In an implementation, the rotation factor of the bandwidth of 320 MHz may start with four rotation factors of an existing bandwidth of 80 MHz. To be specific, the rotation factor sequence is $[PR_{80} \ C_1 \ C_2... \ C_{12}]$, where $PR_{80}$ is a rotation factor [1 -1 -1 -1] of the existing bandwidth of 80 MHz, and $C_i$ belongs to a rotation factor candidate value [1 -1 j -j]. An optimal rotation factor shown in Table 6-2 is obtained through computer search.

**Table 6-2**

| No. | Sequence | Largest value of a sum of PAPRs of an L-STF and an L-LTF |
|-----|----------|----------------------------------------------------------|
| 1 | [1 -1 -1 -1 j1 -1 j -1 -j -1 -j j j -1 1] | 14.0985 |
| 2 | [1 -1 -1 -1 -j 1 -1 -j -1 j -1 j -j -j -1 1] | 14.0985 |

Specifically, for the 13 cases in Table 6-1, a sum of PAPRs that are of the L-STF and the L-LTF and that are obtained by using all rotation factor sequences obtained through computer search is calculated, and a largest value of the sum of PAPRs of the L-STF and the L-LTF in the 13 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 6-2. When the sequence 1 is used, a sum of MAX PAPRs is 14.0985. Specifically, a PAPR of the L-STF is 6.5685, and a PAPR of the L-LTF is 7.5300. When the sequence 2 is used, a sum of MAX PAPRs is 14.0985. Specifically, a PAPR of the L-STF is 6.5685, and a PAPR of the L-LTF is 7.5300. MAX PAPRs of the sequence 1 and the sequence 2 are the smallest among MAX PAPRs corresponding to all found rotation factor sequences.

In another implementation, the rotation factor of the bandwidth of 320 MHz may start with eight rotation factors of an existing bandwidth of 160 MHz. To be specific, the rotation factor sequence is $[PR_{160} \ C_1 \ C_2... \ C_8]$, where $PR_{160}$ is a rotation factor [1 -1 -1 -1 1 -1 -1 -1] of the existing bandwidth of 80 MHz, and $C_i$ belongs to a rotation factor candidate value [1 -1 j -j]. An optimal rotation factor shown in Table 6-3 is obtained through computer search.

**Table 6-3**

| No. | Sequence | Largest value of a sum of PAPRs of an L-STF and an L-LTF |
|-----|----------|----------------------------------------------------------|
| 1 | [1 -1 -1 -1 1 -1 -1 -1 -1 -1 -1 1-1 1 1 -1] | 15.143135 |

Specifically, for the 13 cases in Table 6-1, a sum of PAPRs that are of the L-STF and the L-LTF and that are obtained by using all rotation factor sequences obtained through computer search is calculated, and a largest value of the sum of PAPRs of the L-STF and the L-LTF in the 13 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 6-3.

In still another implementation, the rotation factor sequence is [1 $C_1$ $C_2$... $C_{15}$], where Ci belongs to a rotation factor candidate value [1 -1]. An optimal rotation factor sequence shown in Table 6-4 is obtained through computer search.

**Table 6-4**

| No. | Sequence | Largest value of a sum of PAPRs of an L-STF and an L-LTF |
|---|---|---|
| 1 | [1 1 1 1 1 1 -1 -1 1 -1 -1 1 -1 1 -1 1] | 14.353279 |
| 2 | [1 1 1 1 1 1 -1 -1 -1 1 1 -1 1 -1 1 -1] | 14.226626 |
| 3 | [1 1 1 1 1 -1 -1 1 -1 1 1 -1 -1 -1 1 -1] | 14.626378 |
| 4 | y 1 1 1 1 -1 -1 1 1 -1 -1 1 1 1 -1 1 -y | 14.590062 |
| 5 | [1 1 1 1 -1 -1 1 -1 1 -1 1 -1 1 1 1 -1 -1] | 14.592022 |
| 6 | [1 1 1 1 -1 -1 -1 1 -1 -1 -1 1 1 -1 1 -1 1] | 14.572772 |
| 7 | [1 1 1 -1 1 1 1 -1 1 -1 -1 1 1 -1 1 -1 -1] | 14.565244 |
| 8 | [1 1 -1 1 -1 1 1 -1 1 -1 -1 -1 1 1 -1 -1] | 14.565244 |
| 9 | [1 1 -1 1 -1 1 1 -1 -1 1 1 1 1 1 -1 -1] | 14.572179 |
| 10 | [1 1 -1 1 -1 1 -1 -1 1 1 -1 -1 -1 -1 -1 1 1] | 14.384946 |
| 11 | [1 1 -1 1 -1 1 -1 -1 1 1 -1 -1 -1 -1 -1 1 1] | 14.130011 |
| 12 | [1 1 -1 -1 1 1 1 1 1 -1 1 -1 -1 -1 1 -1 1] | 14.384946 |
| 13 | [1 1 -1 -1 1 -1 1 1 -1 1 -1 1 1 1 -1 -1 -1 -1] | 14.592022 |
| 14 | [1 1 -1 -1 -1 -1 -1 1 1 -1 -1 1 1 -1 1 -1 -1] | 14.572179 |
| 15 | [1 1 -1 -1 -1 -1 -1 1 1 -1 -1 1 1 -1 1 1 1] | 14.130011 |
| 16 | [1 1 -1 -1 -1 -1 -1 1 1 1 -1 1 -1 1 -1 1 1] | 14.414327 |
| 17 | [1 -1 1 1 1 -1 1 1 1 1 -1 -1 -1 -1 -1 1 1] | 14.582789 |
| 18 | [1 -1 1 1 1 -1 -1 1 -1 1 1 -1 -1 -1 -1 1 1] | 14.626378 |
| 19 | [1 -1 1 1 -1 1 1 1 -1 1 1 -1 -1 -1 -1 -1 1 1] | 14.488078 |
| 20 | [1 -1 1 1 -1 1 1 1 -1 -1 1 1 -1 -1 1 1 1 1] | 14.572772 |
| 21 | [1 -1 1 1 -1 1 1 -1 1 1 1 -1 -1 -1 -1 -1 1 1] | 14.414327 |
| 22 | [1 -1 1 1 -1 1 1 -1 -1 1 1 1 1 -1 -1 -1 -1 -1 -1] | 14.226626 |
| 23 | [1 -1 1 1 -1 1 -1 -1 -1 1 1 -1 -1 1 1 1 1 1 1] | 14.353279 |
| 24 | [1 -1 1 1 -1 -1 -1 1 1 1 1 -1 1 1 -1 -1 -1 -1 -1] | 14.590062 |
| 25 | [1 -1 1 1 -1 -1 -1 -1 1 1 -1 1 1 1 1 -1 -1 1 1] | 14.384946 |
| 26 | [1 -1 1 1 -1 -1 -1 -1 -1 -1 1 1 1 1 -1 -1 1 1] | 14.531248 |
| 27 | [1 -1 -1 1 1 1 1 -1 1 -1 1 -1 -1 -1 -1 1 1 -1 1 1] | 14.531248 |
| 28 | [1 -1 -1 1 1 -1 1 1 -1 -1 1 1 1 -1 -1 -1 -1 -1 1 1] | 14.424289 |
| 29 | [1 -1 -1 1 1 -1 1 1 -1 -1 -1 1 1 1 1 1 1 1 -1] | 14.184752 |
| 30 | [1 -1 -1 -1 -1 -1 1 1 1 1 1 1 -1 1 1 1 1 1 -1 1 1] | 14.582789 |
| 31 | [1 -1 -1 -1 -1 -1 1 1 1 -1 -1 1 1 -1 1 -1 1 1] | 14.384946 |
| 32 | [1 -1 -1 -1 -1 -1 -1 1 1 1 -1 1 1 -1 -1 1 1 1] | 14.424289 |

(continued)

| No. | Sequence | Largest value of a sum of PAPRs of an L-STF and an L-LTF |
|---|---|---|
| 33 | [1 -1 -1 -1 -1 -1 -1 1 1 1 -1 1 -1 1 1 -1] | 14.184752 |
| 34 | [1 -1 -1 -1 -1 -1 -1 1 -1 -1 1 1 -1 1 -1 1] | 14.488078 |

Specifically, for the 13 cases in Table 6-1, a sum of PAPRs that are of the L-STF and the L-LTF and that are obtained by using all rotation factor sequences obtained through computer search is calculated, and a largest value of the sum of PAPRs of the L-STF and the L-LTF in the 13 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 6-4.

For example, the following describes in detail a rotation factor sequence used when X=240 MHz by using (7) to (12).

(7) X=240 MHz, preamble puncturing is not considered, only a case of a full bandwidth is considered, and PAPR performance of 160 MHz and 80 MHz is not considered.

In a scenario, several cases shown in the following Table 7-1 are considered when a rotation factor sequence of X=240 MHz is designed.

**Table 7-1**

| Case 1 | 240 MHz [1 1 1 1 1 1 1 1 1 1 1 1] |
|---|---|
| Case 2 | 160 MHz [x x x x 1 1 1 1 1 1 1 1] |
| Case 3 | 160 MHz [1 1 1 1 1 1 1 1 x x x x] |
| Case 4 | 80 MHz [1 1 1 1 x x x x x x x x] |
| Case 5 | 80 MHz [x x x x x x x x 1 1 1 1] |

1 indicates that the 20 MHz is not punctured, and x indicates that the 20 MHz is punctured.

In an implementation, the rotation factor of the bandwidth of 240 MHz may start with four rotation factors of an existing bandwidth of 80 MHz. To be specific, the rotation factor sequence is $[PR_{80} C_1 C_2... C_8]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 7-2 is obtained through computer search.

**Table 7-2**

| No. | Sequence | Largest value of a sum of PAPRs of an L-STF and an L-LTF |
|---|---|---|
| 1 | [1 -1 -1 -1 1 -1 1 1 -1 1 1 1] | 11.2758 |

Specifically, for the 5 cases in Table 7-1, a sum of PAPRs that are of the L-STF and the L-LTF and that are obtained by using all rotation factor sequences obtained through computer search is calculated, and a largest value of the sum of PAPRs of the L-STF and the L-LTF in the 5 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 7-2. A largest value of a sum of PAPRs of the L-STF and the L-LTF that correspond to the sequence 1 is a sum of PAPRs of the L-STF and the L-LTF when the sequence 1 is used in Case 2. Specifically, the PAPR of the L-STF is 5.0997, and the PAPR of the L-LTF is 6.1761.

In another implementation, a rotation factor sequence $[1 C_1 C_2... C_{11}]$ is used, and Ci belongs to a rotation factor candidate value [1 -1 j -j]. An optimal rotation factor shown in Table 7-3 is obtained through computer search.

**Table 7-3**

| No. | Sequence | Largest value of a sum of PAPRs of an L-STF and an L-LTF |
|---|---|---|
| 1 | [1 j -j -1 -1 -j -j -1 -1 -j j 1] | 11.1832 |
| 2 | [1 -j j -1 -1 j j -1 -1 j -j 1] | 11.1832 |

Specifically, for the 5 cases in Table 7-1, a sum of PAPRs that are of the L-STF and the L-LTF and that are obtained by using all rotation factor sequences obtained through computer search is calculated, and a largest value of the sum of PAPRs of the L-STF and the L-LTF in the 5 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 7-3. A largest value of a sum of PAPRs of the L-STF and the L-LTF that correspond to the sequence 1 is a sum of PAPRs of the L-STF and the L-LTF when the sequence 1 is used in Case 2/Case 3. Specifically, the PAPR of the L-STF is 5.2497, and the PAPR of the L-LTF is 5.9335. A largest value of a sum of PAPRs of the L-STF and the L-LTF that correspond to the sequence 2 is a sum of PAPRs of the L-STF and the L-LTF when the sequence 2 is used in Case 2/Case 3. Specifically, the PAPR of the L-STF is 5.2497, and the PAPR of the L-LTF is 5.9335.

In another scenario, several cases shown in the following Table 7-4 are considered when a rotation factor sequence of X=240 MHz is designed.

**Table 7-4**

| Case 1 | 240 MHz [1 1 1 1 1 1 1 1 1 1 1 1] |
| Case 2 | 160 MHz [x x x x 1 1 1 1 1 1 1 1] |
| Case 3 | 80 MHz [1 1 1 1 x x x x x x x x] |

1 indicates that the 20 MHz is not punctured, and x indicates that the 20 MHz is punctured.

In an implementation, a rotation factor sequence [1 $C_1$ $C_2$... $C_{11}$] is used, and Ci belongs to a rotation factor candidate value [1 -1 j -j]. An optimal rotation factor shown in Table 7-5 is obtained through computer search.

**Table 7-5**

| No. | Sequence | Largest value of a sum of PAPRs of an L-STF and an L-LTF |
|---|---|---|
| 1 | [1 -1 1 1 1 -1 1 -1 -1 1 1 1] | 10.767 |

Specifically, for the 3 cases in Table 7-4, a sum of PAPRs that are of the L-STF and the L-LTF and that are obtained by using all rotation factor sequences obtained through computer search is calculated, and a largest value of the sum of PAPRs of the L-STF and the L-LTF in the 3 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 7-5. A largest value of a sum of PAPRs of the L-STF and the L-LTF that correspond to the sequence 1 is a sum of PAPRs of the L-STF and the L-LTF when the sequence 1 is used in Case 2. Specifically, the PAPR of the L-STF is 4.8274, and the PAPR of the L-LTF is 5.9396.

In another scenario, several cases shown in the following Table 7-6 are considered when a rotation factor sequence of X=240 MHz is designed.

**Table 7-6**

| Case 1 | 240 MHz [1 1 1 1 1 1 1 1 1 1 1 1] |
| Case 2 | 160 MHz [1 1 1 1 1 1 1 1 x x x x] |
| Case 3 | 80 MHz [x x x x x x x x 1 1 1 1] |

In an implementation, a rotation factor sequence [1 $C_1$ $C_2$... $C_{11}$] is used, and Ci belongs to a rotation factor candidate value [1 -1 j -j]. An optimal rotation factor shown in Table 7-7 is obtained through computer search.

**Table 7-7**

| No. | Sequence | Largest value of a sum of PAPRs of an L-STF and an L-LTF |
|---|---|---|
| 1 | [1 1 1 -1 -1 1 -1 1 1 1 -1 1] | 10.767 |

Specifically, for the 3 cases in Table 7-6, a sum of PAPRs that are of the L-STF and the L-LTF and that are obtained by using all rotation factor sequences obtained through computer search is calculated, and a largest value of the sum of PAPRs of the L-STF and the L-LTF in the 3 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 7-7. A largest value of a sum of PAPRs of the L-STF and the L-LTF that correspond to the sequence 1 is a sum of PAPRs of the L-STF and the L-LTF when the sequence 1 is used in Case 2. Specifically, the PAPR of the L-STF is 4.8274, and the PAPR of the L-LTF is 5.9396.

In another implementation, the rotation factor of the bandwidth of 240 MHz may start with eight rotation factors of an existing bandwidth of 160 MHz. To be specific, the rotation factor sequence is $[PR_{160} C_1 C_2... C_4]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 7-8 is obtained through computer search.

Table 7-8

| No. | Sequence | Largest value of a sum of PAPRs of an L-STF and an L-LTF |
|-----|----------|-----------------------------------------------------------|
| 1 | [1 -1 -1 -1 1 -1 -1 -1 j -j 1 1] | 13.266011 |
| 2 | [1 -1 -1 -1 1 -1 -1 -1 -j j 1 1] | 13.26011 |
| 3 | [1 -1 -1 -1 1 -1 -1 -1 j -j -j 1] | 13.375246 |
| 4 | [1 -1 -1 -1 1 -1 -1 -1 -1 j-1 1] | 13.688204 |
| 5 | [1 -1 -1 -1 1 -1 -1 -1 -1 j -j 1] | 13.616434 |
| 6 | [1 -1 -1 -1 1-1 -1 -1 -1 -j j 1] | 13.616434 |
| 7 | [1 -1 -1 -1 1 -1 -1 -1 -1 -j-1 1] | 13.688204 |
| 8 | [1 -1 -1 -1 1-1 -1 -1 -j j j 1] | 13.375246 |

(8) X=240 MHz, preamble puncturing is not considered, only a case of a full bandwidth is considered, and PAPR performance of 160 MHz and 80 MHz is not considered. In other words, when the rotation factor sequence is designed, only Case 1 [1 1 1 1 1 1 1 1 1 1 1 1] is considered.

For a non-contiguous 160+80 MHz PPDU, a rotation factor of 160 MHz, for example, [ 1 -1 -1 -1 1 -1 -1 -1], defined in the standard is used on a 160 MHz segment. A rotation factor of 80 MHz, for example, [1 -1 -1 - 1], defined in the standard is used on an 80 MHz segment.

In an implementation, the rotation factor of the bandwidth of 240 MHz may start with four rotation factors of an existing bandwidth of 80 MHz. To be specific, the rotation factor sequence is $[PR_{80} C_1 C_2... C8]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 8-1 is obtained through computer search.

Table 8-1

| No. | Sequence | Largest value of a sum of PAPRs of an L-STF and an L-LTF |
|-----|----------|-----------------------------------------------------------|
| 1 | [1 -1 -1 -1 j 1 -j 1 1 -1 1] | 10.061178 |
| 2 | [1 -1 -1 -1 -j 1 j 1 1 -1 1] | 10.061178 |

When the sequence 1 is used, a PAPR of the L-STF is 4.498565, and a PAPR of the L-LTF is 5.562613. When the sequence 2 is used, a PAPR of the L-STF is 4.498565, and a PAPR of the L-LTF is 5.562613.

Further, a rotation factor sequence shown in Table 8-2 may be obtained through computer search based on PAPR performance of an L-SIG field or the like.

Table 8-2

| No. | Sequence | Largest value of a sum of PAPRs of an L-STF and an L-LTF |
|-----|----------|-----------------------------------------------------------|
| 1 | [1 -1 -1 -1 1 1 1 -1 1 1 -1 1] | 10.071159 |
| 2 | [1 -1 -1 -1 j 1 j j j j j -1] | 10.398642 |
| 3 | [1 -1 -1 -1 -j 1 -j -j -j j j -1] | 10.398642 |

In another implementation, the rotation factor sequence is [1 $C_1$ $C_2$... $C_{11}$], where Ci belongs to a rotation factor candidate value [1 -1 j -j]. An optimal rotation factor shown in Table 8-3 is obtained through computer search.

**Table 8-3**

| No. | Sequence | Largest value of a sum of PAPRs of an L-STF and an L-LTF |
|---|---|---|
| 1 | [1111-1-111-11-11] | 9.312957 |
| 2 | [1-11-111-1-11111] | 9.312957 |

Further, a rotation factor sequence shown in Table 8-4 may be obtained through computer search based on PAPR performance of an L-SIG field or the like.

**Table 8-4**

| No. | Sequence | Largest value of a sum of PAPRs of an L-STF and an L-LTF |
|---|---|---|
| 1 | [11111-1-111-11-1] | 9.488007 |
| 2 | [1 1 1 1 -1 -1 1 1 -1 1 -1 1] | 9.312957 |
| 3 | [1 j -1 -j 1 -j 1 j 1 -j -1 j] | 9.524506 |
| 4 | [1 j -1 -j -1 -j -1 -j -1 j 1 -j] | 9.524506 |
| 5 | [1-11-111-1-11111] | 9.312957 |
| 6 | [1 -1 1 -1 -1 1 1 -1 -1 -1 -1 -1] | 9.488007 |
| 7 | [1 -j -1 j 1 j 1 j 1 j -1 -j] | 9.524506 |
| 8 | [1 -j -1 -j -1 j -1 j -1 -j 1 j] | 9.524506 |

In still another implementation, the rotation factor of the bandwidth of 240 MHz may start with eight rotation factors of an existing bandwidth of 160 MHz. To be specific, the rotation factor sequence is [$PR_{160}$ $C_1$ $C_2$... $C_4$], where $PR_{160}$ is a rotation factor [1 -1 -1 -1 1 1 -1 -1 -1] of the existing bandwidth of 160 MHz, and Ci belongs to a rotation factor candidate value [1 -1 j -j]. An optimal rotation factor sequence shown in Table 8-5 is obtained through computer search.

**Table 8-5**

| No. | Sequence | Largest value of a sum of PAPRs of an L-STF and an L-LTF |
|---|---|---|
| 1 | [1 -1 -1 -1 1 1 -1 -1 -1 -1 1 j 1] | 12.423119 |
| 2 | [1 -1 -1 -1 1 1 -1 -1 -1 -1 1 -j 1] | 12.423119 |

Further, a rotation factor sequence shown in Table 8-6 may be obtained through computer search based on PAPR performance of an L-SIG field or the like.

**Table 8-6**

| No. | Sequence | Largest value of a sum of PAPRs of an L-STF and an L-LTF |
|---|---|---|
| 1 | [1 -1 -1 -1 1 1-1 -1 -1 j -j 1 1] | 12.916513 |
| 2 | [1 -1 -1 -1 1 1 -1 -1 -1 -1 -1 1 1] | 12.427058 |
| 3 | [1 -1 -1 -1 1 1-1 -1 -1 -j j 1 1] | 12.916513 |

(9) X=240 MHz, only preamble puncturing is considered, a case of a full bandwidth is not considered, and PAPR performance of 160 MHz and 80 MHz is considered.

Several cases shown in the following Table 9-1 are considered when a rotation factor sequence of X=240 MHz is designed.

**Table 9-1**

| Case 1 | 200 MHz [x x 1 1 1 1 1 1 1 1 1 1] |
|--------|--------------------------------------|
| Case 2 | 200 MHz [1 1 x x 1 1 1 1 1 1 1 1] |
| Case 3 | 200 MHz [1 1 1 1 x x 1 1 1 1 1 1] |
| Case 4 | 200 MHz [1 1 1 1 1 1 x x 1 1 1 1] |
| Case 5 | 200 MHz [1 1 1 1 1 1 1 1 x x 1 1] |
| Case 6 | 200 MHz [1 1 1 1 1 1 1 1 1 1 x x] |
| Case 7 | 160 MHz [x x x x 1 1 1 1 1 1 1 1] |
| Case 8 | 160 MHz [1 1 1 1 x x x x 1 1 1 1] |
| Case 9 | 160 MHz [1 1 1 1 1 1 1 1 x x x x] |

1 indicates that the 20 MHz is not punctured, and x indicates that the 20 MHz is punctured.

In an implementation, the rotation factor of the bandwidth of 240 MHz may start with four rotation factors of an existing bandwidth of 80 MHz. To be specific, the rotation factor sequence is $[PR_{80}\ C_1\ C_2...\ C_8]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 9-2 is obtained through computer search.

Specifically, for the nine cases in Table 9-1, a sum of PAPRs that are of the L-STF and the L-LTF and that are obtained by using all rotation factor sequences obtained through computer search is calculated, and a largest value of the sum of PAPRs of the L-STF and the L-LTF in the nine cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 9-2. A largest value of a sum of PAPRs of the L-STF and the L-LTF that correspond to the sequence 1 is a sum of PAPRs of the L-STF and the L-LTF when the sequence 1 is used in Case 3. Specifically, the PAPR of the L-STF is 6.6907, and the PAPR of the L-LTF is 7.6521.

**Table 9-2**

| No. | Sequence | Largest value of a sum of PAPRs of an L-STF and an L-LTF |
|-----|----------|----------------------------------------------------------|
| 1 | [1 -1 -1 -1 -1 -1 -1 1 -1 1 1 -1] | 14.2528 |

In another implementation, the rotation factor sequence is $[1\ C_1\ C_2...\ C_{11}]$, where $C_i$ belongs to a rotation factor candidate value [1 -1 j -j]. An optimal rotation factor shown in Table 9-3 is obtained through computer search.

**Table 9-3**

| No. | Sequence | Largest value of a sum of PAPRs of an L-STF and an L-LTF |
|-----|----------|----------------------------------------------------------|
| 1 | [1 1 -1 j -1 -1 -j j -1 j j -j] | 13.447461 |
| 2 | [1 1 -1 -j -1 -1 j -j -1 -j -j j] | 13.447461 |
| 3 | [1 -1 -1 j -1 1 j j -1 j -j -j] | 13.447461 |
| 4 | [1 -1 -1 -j -1 1 -j -j -1 -j j j] | 13.447461 |

Specifically, for the nine cases in Table 9-1, a sum of PAPRs that are of the L-STF and the L-LTF and that are obtained by using all rotation factor sequences obtained through computer search is calculated, and a largest value of the sum of PAPRs of the L-STF and the L-LTF in the nine cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 to the sequence 4 shown in Table 9-3.

In still another implementation, the rotation factor of the bandwidth of 240 MHz may start with eight rotation factors of an existing bandwidth of 160 MHz. To be specific, the rotation factor sequence is $[PR_{160}\ C_1\ C_2...\ C_4]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 9-4 is obtained through computer search.

**Table 9-4**

| No. | Sequence | Largest value of a sum of PAPRs of an L-STF and an L-LTF |
|---|---|---|
| 1 | [1 -1 -1 -1 1 -1 -1 -1 j -1 -1 1] | 14.847836 |
| 2 | [1 -1 -1 -1 1 -1 -1 -1 -j -1 -1 1] | 14.847836 |

Specifically, for the nine cases in Table 9-1, a sum of PAPRs that are of the L-STF and the L-LTF and that are obtained by using all rotation factor sequences obtained through computer search is calculated, and a largest value of the sum of PAPRs of the L-STF and the L-LTF in the nine cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 9-4.

In still another implementation, for the rotation factor sequence of 240 MHz, an existing rotation factor of a bandwidth of 160 MHz or an existing rotation factor of a bandwidth of 80 MHz may alternatively be considered. Specifically, the rotation factor sequence of 240 MHz may be in the following form: $[PR_{80}\ CiPR_{80}\ C_2PR_{80}]$, or $[PR_{160}\ C_1PR_{80}]$, or $[PR_{80}\ C_1PR_{160}]$. $PR_{160}$ is a rotation factor [1 -1 -1 -1 1 -1 -1 -1] of the existing bandwidth of 160 MHz, and $PR_{80}$ is a rotation factor [1 -1 -1 -1] of the existing bandwidth of 80 MHz. $CiPR_{80}$ means that each $PR_{80}$ rotation factor is rotated by Ci, and $CiPR_{160}$ means that each $PR_{160}$ rotation factor is rotated by Ci. Herein, Ci may be 1, -1, j, or -j. In this case, a specific sequence obtained is shown in Table 9-5.

**Table 9-5**

| Sequence obtaining method | Sequence | Largest value of a sum of PAPRs of an L-STF and an L-LTF |
|---|---|---|
| $[PR_{80}\ C_1\ PR_{80}\ C_2\ PR_{80}]$ | [1 -1 -1 -1 1 -1 -1 -1 -1 1 1 1] | 16.3812 |
| $[PR_{160}\ C_1\ PR_{80}]$ | | |
| $[PR_{80}\ C_1\ PR_{160}]$ | | |

Specifically, for the nine cases in Table 9-1, a sum of PAPRs that are of the L-STF and the L-LTF and that are obtained by using all rotation factor sequences obtained through computer search is calculated, and a largest value of the sum of PAPRs of the L-STF and the L-LTF in the nine cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 9-5. A largest value of a sum of PAPRs of the L-STF and the L-LTF that correspond to the sequence is a sum of PAPRs of the L-STF and the L-LTF when the sequence is used in Case 1/Case 3/Case 5. Specifically, the PAPR of the L-STF is 7.6524, and the PAPR of the L-LTF is 8.7288.

(10) X=240 MHz, only preamble puncturing is considered, a case of a full bandwidth is not considered, and PAPR performance of 160 MHz and 80 MHz is considered. Specifically, several cases shown in the following Table 10-1 are considered when a rotation factor sequence of X=240 MHz is designed.

**Table 10-1**

| Case 1 | 200 MHz [x x 1 1 1 1 1 1 1 1 1 1] |
|---|---|
| Case 2 | 200 MHz [1 1 x x 1 1 1 1 1 1 1 1] |
| Case 3 | 200 MHz [1 1 1 1 x x 1 1 1 1 1 1] |
| Case 4 | 200 MHz [1 1 1 1 1 1 x x 1 1 1 1] |
| Case 5 | 200 MHz [1 1 1 1 1 1 1 1 x x 1 1] |
| Case 6 | 200 MHz [1 1 1 1 1 1 1 1 1 1 x x] |
| Case 7 | 160 MHz [x x x x 1 1 1 1 1 1 1 1] |
| Case 8 | 160 MHz [1 1 1 1 x x x x 1 1 1 1] |
| Case 9 | 160 MHz [1 1 1 1 1 1 1 1 x x x x] |
| Case 10 | 160 MHz [1 1 1 1 1 1 1 1] |

(continued)

| Case 11 | 160 MHz [1 1 1 1 1 1 1] |
|---------|-------------------------|
| Case 12 | 120 MHz [x x 1 1 1 1 1] |
| Case 13 | 120 MHz [1 1 x x 1 1 1] |
| Case 14 | 120 MHz [1 1 1 x x 1 1] |
| Case 15 | 120 MHz [1 1 1 1 1 x x] |
| Case 16 | 120 MHz [x x 1 1 1 1 1] |
| Case 17 | 120 MHz [1 1 x x 1 1 1] |
| Case 18 | 120 MHz [1 1 1 x x 1 1] |
| Case 19 | 120 MHz [1 1 1 1 1 x x] |
| Case 20 | 80 MHz [1 1 1 1] |
| Case 21 | 80 MHz [1 1 1 1] |
| Case 22 | 80 MHz [1 1 1 1] |
| Case 23 | 40 MHz [1 1 x x] |
| Case 24 | 40 MHz [x x 1 1] |
| Case 25 | 40 MHz [1 1 x x] |
| Case 26 | 40 MHz [x x 1 1] |
| Case 27 | 40 MHz [1 1 x x] |
| Case 28 | 40 MHz [x x 1 1] |

1 indicates that the 20 MHz is not punctured, and x indicates that the 20 MHz is punctured.

In an implementation, the rotation factor of the bandwidth of 240 MHz may start with four rotation factors of an existing bandwidth of 80 MHz. To be specific, the rotation factor sequence is $[PR_{80}\ C_1\ C_2...\ C_8]$, where $PR_{80}$ is a rotation factor [1 -1 -1 -1] of the existing bandwidth of 80 MHz, and Ci belongs to a rotation factor candidate value [1 -1 j -j]. An optimal rotation factor shown in Table 10-2 is obtained through computer search.

**Table 10-2**

| No. | Sequence | Largest value of a sum of PAPRs of an L-STF and an L-LTF |
|-----|----------|----------------------------------------------------------|
| 1 | [1 -1 -1 -1 -1 -1 -1 1 -1 1 1 -1] | 14.3428 |

Specifically, for the 28 cases in Table 10-1, a sum of PAPRs that are of the L-STF and the L-LTF and that are obtained by using all rotation factor sequences obtained through computer search is calculated, and a largest value of the sum of PAPRs of the L-STF and the L-LTF in the 28 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 10-2. A largest value of a sum of PAPRs of the L-STF and the L-LTF that correspond to the sequence 1 is a sum of PAPRs of the L-STF and the L-LTF when the sequence 1 is used in Case 3. Specifically, the PAPR of the L-STF is 6.6907, and the PAPR of the L-LTF is 7.6521.

In another implementation, the rotation factor sequence is $[1\ C_1\ C_2...\ C_{11}]$, where Ci belongs to a rotation factor candidate value [1 -1 j -j]. An optimal rotation factor shown in Table 10-3 is obtained through computer search.

**Table 10-3**

| No. | Sequence | Largest value of a sum of PAPRs of an L-STF and an L-LTF |
|-----|----------|----------------------------------------------------------|
| 1 | [1 1 -1 1 -1 1 -1 -1 -1 -1 1 1] | 14.1812 |
| 2 | [1 1 -1 -1 -1 -1 1 -1 1 -1 1 1] | 14.1812 |

Specifically, for the 28 cases in Table 10-1, a sum of PAPRs that are of the L-STF and the L-LTF and that are obtained by using all rotation factor sequences obtained through computer search is calculated, and a largest value of the sum of PAPRs of the L-STF and the L-LTF in the 28 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 10-3. A largest value of a sum of PAPRs of the L-STF and the L-LTF that correspond to the sequence 1 is a sum of PAPRs of the L-STF and the L-LTF when the sequence 1 is used in Case 15/Case 16. Specifically, the PAPR of the L-STF is 6.5665, and the PAPR of the L-LTF is 7.6147. A largest value of a sum of PAPRs of the L-STF and the L-LTF that correspond to the sequence 2 is a sum of PAPRs of the L-STF and the L-LTF when the sequence 2 is used in Case 15/Case 16. Specifically, the PAPR of the L-STF is 6.5665, and the PAPR of the L-LTF is 7.6147.

In still another implementation, the rotation factor of the bandwidth of 240 MHz may start with eight rotation factors of an existing bandwidth of 160 MHz. To be specific, the rotation factor sequence is $[PR_{160}\ C_1\ C_2 ... C_4]$, where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 10-4 is obtained through computer search.

**Table 10-4**

| No. | Sequence | Largest value of a sum of PAPRs of an L-STF and an L-LTF |
|---|---|---|
| 1 | [1 -1 -1 -1 1 -1 -1 -1 j -1 -1 1] | 14.919330 |
| 2 | [1 -1 -1 -1 1 -1 -1 -1 -j -1 -1 1] | 14.919330 |

Specifically, for the 28 cases in Table 10-1, a sum of PAPRs that are of the L-STF and the L-LTF and that are obtained by using all rotation factor sequences obtained through computer search is calculated, and a largest value of the sum of PAPRs of the L-STF and the L-LTF in the 28 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 10-4.

In still another implementation, for the rotation factor sequence of 240 MHz, an existing rotation factor of a bandwidth of 160 MHz or an existing rotation factor of a bandwidth of 80 MHz may alternatively be considered. Specifically, the rotation factor sequence of 240 MHz may be in the following form: a rotation factor $[PR_{80}\ CiPR_{80}\ C_2PR_{80}]$, $[PR_{160}\ C_1PR_{80}]$, or $[PR_{80}\ C_1PR_{160}]$. $PR_{160}$ is a rotation factor [1 -1 -1 -1 1 -1 -1 -1] of the existing bandwidth of 160 MHz, $PR_{80}$ is a rotation factor [1 -1 -1 -1] of the existing bandwidth of 80 MHz, and Ci belongs to a rotation factor candidate value [1 -1 j -j]. $CiPR_{80}$ means that each $PR_{80}$ rotation factor is rotated by Ci, and $CiPR_{160}$ means that each $PR_{160}$ rotation factor is rotated by Ci. Herein, Ci may be 1, -1, j, or -j. An optimal rotation factor shown in Table 10-5 is obtained through computer search.

**Table 10-5**

| Sequence obtaining method | Sequence | Largest value of a sum of PAPRs of an L-STF and an L-LTF |
|---|---|---|
| $[PR_{80}\ C_1\ PR_{80}\ C_2\ PR_{80}]$ | [1 -1 -1 -1 1 -1 -1 -1 -1 1 1 1] | 16.3812 |
| $[PR_{160}\ C_1\ PR_{80}]$ | | |
| $[PR_{80}\ C_1\ PR_{160}]$ | | |

Specifically, for the 28 cases in Table 10-1, a sum of PAPRs that are of the L-STF and the L-LTF and that are obtained by using all rotation factor sequences obtained through computer search is calculated, and a largest value of the sum of PAPRs of the L-STF and the L-LTF in the 28 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 10-5. A largest value of a sum of PAPRs of the L-STF and the L-LTF that correspond to the sequence is a sum of PAPRs of the L-STF and the L-LTF when the sequence is used in Case 1/Case 3/Case 5. Specifically, the PAPR of the L-STF is 7.6524, and the PAPR of the L-LTF is 8.7288.

(10) X=240 MHz, cases of a full bandwidth and preamble puncturing are considered, and PAPR performance of 160 MHz and 80 MHz is considered. Specifically, several cases in the following Table 11-1 may be considered when a rotation factor sequence of X=240 MHz is designed.

**Table 11-1**

| | |
|---|---|
| Case 1 | 240 MHz [1 1 1 1 1 1 1 1 1 1 1 1] |
| Case 2 | 200 MHz [x x 1 1 1 1 1 1 1 1 1 1] |
| Case 3 | 200 MHz [1 1 x x 1 1 1 1 1 1 1 1] |
| Case 4 | 200 MHz [1 1 1 1 x x 1 1 1 1 1 1] |
| Case 5 | 200 MHz [1 1 1 1 1 1 x x 1 1 1 1] |
| Case 6 | 200 MHz [1 1 1 1 1 1 1 1 x x 1 1] |
| Case 7 | 200 MHz [1 1 1 1 1 1 1 1 1 1 x x] |
| Case 8 | 160 MHz [x x x x 1 1 1 1 1 1 1 1] |
| Case 9 | 160 MHz [1 1 1 1 x x x x 1 1 1 1] |
| Case 10 | 160 MHz [1 1 1 1 1 1 1 1 x x x x] |
| Case 11 | 160 MHz [1 1 1 1 1 1 1 1] |
| Case 12 | 160 MHz [1 1 1 1 1 1 1 1] |
| Case 13 | 120 MHz [x x 1 1 1 1 1] |
| Case 14 | 120 MHz [1 1 x x 1 1 1] |
| Case 15 | 120 MHz [1 1 1 1 x x 1 1] |
| Case 16 | 120 MHz [1 1 1 1 1 1 x x] |
| Case 17 | 120 MHz [x x 1 1 1 1 1] |
| Case 18 | 120 MHz [1 1 x x 1 1 1] |
| Case 19 | 120 MHz [1 1 1 1 x x 1 1] |
| Case 20 | 120 MHz [1 1 1 1 1 1 x x] |
| Case 21 | 80 MHz [1 1 1 1] |
| Case 22 | 80 MHz [1 1 1 1] |
| Case 23 | 80 MHz [1 1 1 1] |
| Case 24 | 40 MHz [1 1 x x] |
| Case 25 | 40 MHz [x x 1 1] |
| Case 26 | 40 MHz [1 1 x x] |
| Case 27 | 40 MHz [x x 1 1] |
| Case 28 | 40 MHz [1 1 x x] |
| Case 29 | 40 MHz [x x 1 1] |

1 indicates that the 20 MHz is not punctured, and x indicates that the 20 MHz is punctured.

In an implementation, the rotation factor of the bandwidth of 240 MHz may start with four rotation factors of an existing bandwidth of 80 MHz. To be specific, the rotation factor sequence is [PR$_{80}$ C$_1$ C$_2$... C$_8$], where PR$_{80}$ is a rotation factor [1 -1 -1 -1] of the existing bandwidth of 80 MHz, and Ci belongs to a rotation factor candidate value [1 -1 j -j]. An optimal rotation factor sequence shown in Table 11-2 is obtained through computer search.

**Table 11-2**

| No. | Sequence | Largest value of a sum of PAPRs of an L-STF and an L-LTF |
|---|---|---|
| 1 | [1 -1 -1 -1 -1 -1 -1 1 1 -1 1 1 -1] | 14.3428 |

Specifically, for the 29 cases in Table 11-1, a sum of PAPRs that are of the L-STF and the L-LTF and that are obtained by using all rotation factor sequences obtained through computer search is calculated, and a largest value of the sum of PAPRs of the L-STF and the L-LTF in the 29 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 11-2. A largest value of a sum of PAPRs of the L-STF and the L-LTF that correspond to the sequence 1 is a sum of PAPRs of the L-STF and the L-LTF when the sequence 1 is used in Case 4/Case 17. Specifically, the PAPR of the L-STF is 6.6907, and the PAPR of the L-LTF is 7.6521.

In another implementation, the rotation factor sequence is [1 $C_1$ $C_2$... C11], where $C_i$ belongs to a rotation factor candidate value [1 -1 j -j]. An optimal rotation factor sequence shown in Table 11-3 is obtained through computer search.

**Table 11-3**

| No. | Sequence | Largest value of a sum of PAPRs of an L-STF and an L-LTF |
|---|---|---|
| 1 | [1 1 -1 1 -1 1 -1 -1 -1 -1 1 1] | 14.1812 |
| 2 | [1 1 -1 -1 -1 -1 1 -1 1 -1 1 1] | 14.1812 |

Specifically, for the 29 cases in Table 11-1, a sum of PAPRs that are of the L-STF and the L-LTF and that are obtained by using all rotation factor sequences obtained through computer search is calculated, and a largest value of the sum of PAPRs of the L-STF and the L-LTF in the 29 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 11-3. A largest value of a sum of PAPRs of the L-STF and the L-LTF that correspond to the sequence 1 is a sum of PAPRs of the L-STF and the L-LTF when the sequence 1 is used in Case 16/Case 17. Specifically, the PAPR of the L-STF is 6.5665, and the PAPR of the L-LTF is 7.6147. A largest value of a sum of PAPRs of the L-STF and the L-LTF that correspond to the sequence 2 is a sum of PAPRs of the L-STF and the L-LTF when the sequence 2 is used in Case 16/Case 17. Specifically, the PAPR of the L-STF is 6.5665, and the PAPR of the L-LTF is 7.6147.

In still another implementation, the rotation factor of the bandwidth of 240 MHz may start with eight rotation factors of an existing bandwidth of 160 MHz. To be specific, the rotation factor sequence is [$PR_{160}$ $C_1$ $C_2$... $C_4$], where $PR_{160}$ is a rotation factor [1 -1 -1 -1 1 -1 -1 -1] of the existing bandwidth of 160 MHz, and Ci belongs to a rotation factor candidate value [1 -1 j -j]. An optimal rotation factor shown in Table 11-4 is obtained through computer search.

**Table 11-4**

| No. | Sequence | Largest value of a sum of PAPRs of an L-STF and an L-LTF |
|---|---|---|
| 1 | [1 -1 -1 -1 1 -1 -1 -1 j -1 -1 1] | 15.3658 |
| 2 | [1 -1 -1 -1 1 -1 -1 -1 -j -1 -1 1] | 15.3658 |

Specifically, for the 29 cases in Table 11-1, a sum of PAPRs that are of the L-STF and the L-LTF and that are obtained by using all rotation factor sequences obtained through computer search is calculated, and a largest value of the sum of PAPRs of the L-STF and the L-LTF in the 29 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 11-4. A largest value of a sum of PAPRs of the L-STF and the L-LTF that correspond to the sequence 1 is a sum of PAPRs of the L-STF and the L-LTF when the sequence 1 is used in Case 1. Specifically, the PAPR of the L-STF is 7.3775, and the PAPR of the L-LTF is 7.9883. A largest value of a sum of PAPRs of the L-STF and the L-LTF that correspond to the sequence 2 is a sum of PAPRs of the L-STF and the L-LTF when the sequence 2 is used in Case 1. Specifically, the PAPR of the L-STF is 7.3775, and the PAPR of the L-LTF is 7.9883.

In yet another implementation, for the rotation factor sequence of 240 MHz, an existing rotation factor of a bandwidth of 160 MHz or an existing rotation factor of a bandwidth of 80 MHz may alternatively be considered. Specifically, the rotation factor sequence of 240 MHz may be in the following form: a rotation factor [$PR_{80}$ $C_1PR_{80}$ $C_2PR_{80}$], [$PR_{160}$ $C_1PR_{80}$], or [$PR_{80}$ $C_1PR_{160}$]. $PR_{160}$ is a rotation factor [1 -1 -1 -1 1 -1 -1 -1] of the existing bandwidth of 160 MHz, $PR_{80}$ is a rotation factor [1 -1 -1 -1] of the existing bandwidth of 80 MHz, and Ci belongs to a rotation factor candidate value [1 -1 j -j]. $C_1PR_{80}$ means that each $PR_{80}$ rotation factor is rotated by Ci, and $CiPR_{160}$ means that each $PR_{160}$ rotation factor is rotated by Ci. Herein, Ci may be 1, -1, j, or -j. An optimal rotation factor shown in Table 11-5 is obtained through computer search.

**Table 11-5**

| Sequence obtaining method | Sequence | Largest value of a sum of PAPRs of an L-STF and an L-LTF |
|---|---|---|
| $[PR_{80}\ C_1\ PR_{80}\ C_2\ PR_{80}]$ | [1 -1 -1 -1 1 1 -1 -1 -1 1 1 1] | 16.3812 |
| $[PR_{160}\ C_1\ PR_{80}]$ | | |
| $[PR_{80}\ C_1\ PR_{160}]$ | | |

Specifically, for the 29 cases in Table 11-1, a sum of PAPRs that are of the L-STF and the L-LTF and that are obtained by using all rotation factor sequences obtained through computer search is calculated, and a largest value of the sum of PAPRs of the L-STF and the L-LTF in the 29 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 11-5. A largest value of a sum of PAPRs of the L-STF and the L-LTF that correspond to the sequence is a sum of PAPRs of the L-STF and the L-LTF when the sequence is used in Case 2/Case 4/Case 6. Specifically, the PAPR of the L-STF is 7.6524, and the PAPR of the L-LTF is 8.7288.

(12) X=240 MHz, cases of a full bandwidth and preamble puncturing are considered, and PAPR performance of 160 MHz and 80 MHz is not considered. Specifically, several cases shown in the following Table 12-1 are considered when a rotation factor sequence of X=240 MHz is designed.

**Table 12-1**

| Case 1 | 240 MHz [1 1 1 1 1 1 1 1 1 1 1 1] |
|---|---|
| Case 2 | 200 MHz [x x 1 1 1 1 1 1 1 1 1 1] |
| Case 3 | 200 MHz [1 1 x x 1 1 1 1 1 1 1 1] |
| Case 4 | 200 MHz [1 1 1 1 x x 1 1 1 1 1 1] |
| Case 5 | 200 MHz [1 1 1 1 1 1 x x 1 1 1 1] |
| Case 6 | 200 MHz [1 1 1 1 1 1 1 1 x x 1 1] |
| Case 7 | 200 MHz [1 1 1 1 1 1 1 1 1 1 x x] |
| Case 8 | 160 MHz [x x x x 1 1 1 1 1 1 1 1] |
| Case 9 | 160 MHz [1 1 1 1 x x x x 1 1 1 1] |
| Case 10 | 160 MHz [1 1 1 1 1 1 1 1 x x x x] |

1 indicates that the 20 MHz is not punctured, and x indicates that the 20 MHz is punctured.

In an implementation, the rotation factor of the bandwidth of 240 MHz may start with four rotation factors of an existing bandwidth of 80 MHz. To be specific, the rotation factor sequence is $[PR_{80}\ C_1\ C_2... C_8]$, where $PR_{80}$ is a rotation factor [1 -1 -1 -1] of the existing bandwidth of 80 MHz, and Ci belongs to a rotation factor candidate value [1 -1 j -j]. An optimal rotation factor sequence shown in Table 12-2 is obtained through computer search.

**Table 12-2**

| No. | Sequence | Largest value of a sum of PAPRs of an L-STF and an L-LTF |
|---|---|---|
| 1 | [1 -1 -1 -1 -1 -1 -1 1 1 1 1 -1] | 14.3428 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 shown in Table 12-2. A largest value of a sum of PAPRs of the L-STF and the L-LTF that correspond to the sequence 1 is a sum of PAPRs of the L-STF and the L-LTF when the sequence 1 is used in Case 4. Specifically, the PAPR of the L-STF is 6.6907, and the PAPR of the L-LTF is 7.6521.

In another implementation, the rotation factor sequence is [1 $C_1$ $C_2$... $C_{11}$], where $C_i$ belongs to a rotation factor candidate value [1 -1 j -j]. An optimal rotation factor sequence shown in Table 12-3 is obtained through computer search.

**Table 12-3**

| No. | Sequence | Largest value of a sum of PAPRs of an L-STF and an L-LTF |
|---|---|---|
| 1 | [1 j -1 -j j 1 j 1 j -j -1] | 13.6136 |
| 2 | [1 j -1 -j -1 -j -1 -jj 1 -j -1] | 13.6136 |
| 3 | [1 j -1 -j -1 -j -1 -j -j -1 j 1] | 13.6136 |
| 4 | [1 j -1 -j -j -1 -j -1 -j -1 j 1] | 13.6136 |
| 5 | [1 -j -1 j j -1 j -1 j 1 -j 1] | 13.6136 |
| 6 | [1 -j -1 j -1 j- 1 j j- 1-j 1] | 13.6136 |
| 7 | [1 -j -lj -lj -lj -j 1 j -1] | 13.6136 |
| 8 | [1 -j -1 j -j 1 j 1 -j 1 j -1] | 13.6136 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 to the sequence 8 shown in Table 12-3. A largest value of sums of PAPRs of L-STFs and L-LTFs that correspond to the sequences 1, 3, 5, and 7 is a sum of PAPRs of L-STFs and L-LTFs when the sequences 1, 3, 5, and 7 are used in Case 8. Specifically, PAPRs of the L-STFs are 6.2691, and PAPRs of the L-LTFs are 7.3445. A largest value of sums of PAPRs of L-STFs and L-LTFs that correspond to the sequences 2, 4, 6, and 8 is a sum of PAPRs of L-STFs and L-LTFs when the sequences 2, 4, 6, and 8 are used in Case 10. Specifically, PAPRs of the L-STFs are 6.2691, and PAPRs of the L-LTFs are 7.3445.

In still another implementation, in consideration of station compatibility of an existing mandatory bandwidth of 160 MHz in 802.11ac and 802.11ax, the rotation factor of the bandwidth of 240 MHz starts with eight rotation factors of an existing bandwidth of 160 MHz. To be specific, the rotation factor sequence is [$PR_{160}$ $C_1$ $C_2$... $C_4$], where $PR_{160}$ is a rotation factor [1 -1 -1 -1 1 -1 -1 -1] of the existing bandwidth of 160 MHz, and $C_i$ belongs to a rotation factor candidate value [1 -1 j -j]. An optimal rotation factor sequence shown in Table 12-4 is obtained through computer search.

**Table 12-4**

| No. | Sequence | Largest value of a sum of PAPRs of an L-STF and an L-LTF |
|---|---|---|
| 1 | [1 -1 -1 -1 1 -1 -1 -1 j -1 -1 1] | 15.3638 |
| 2 | [1 -1 -1 -1 1 -1 -1 -1 -j -1 -1 1] | 15.3638 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence 1 and the sequence 2 shown in Table 12-4. A largest value of a sum of PAPRs of the L-STF and the L-LTF that correspond to the sequence 1 is a sum of PAPRs of the L-STF and the L-LTF when the sequence 1 is used in Case 1. Specifically, the PAPR of the L-STF is 7.3775, and the PAPR of the L-LTF is 7.9883. A largest value of a sum of PAPRs of the L-STF and the L-LTF that correspond to the sequence 2 is a sum of PAPRs of the L-STF and the L-LTF when the sequence 2 is used in Case 1. Specifically, the PAPR of the L-STF is 7.3775, and the PAPR of the L-LTF is 7.9883.

In yet another implementation, for the rotation factor sequence of 240 MHz, an existing rotation factor of a bandwidth of 160 MHz or an existing rotation factor of a bandwidth of 80 MHz may alternatively be considered. Specifically, the rotation factor sequence of 240 MHz may be in the following form: a rotation factor [$PR_{80}$ $C_1PR_{80}$ $C_2PR_{80}$], [$PR_{160}$

$C_1 PR_{80}$], or [$PR_{80}$ $C_1 PR_{160}$]. $PR_{160}$ is a rotation factor [1 -1 -1 -1 1 -1 -1 -1] of the existing bandwidth of 160 MHz, $PR_{80}$ is a rotation factor [1 -1 -1 -1] of the existing bandwidth of 80 MHz, and Ci belongs to a rotation factor candidate value [1 -1 j -j]. An optimal rotation factor sequence shown in Table 12-5 is obtained through computer search.

**Table 12-5**

| Sequence obtaining method | Sequence | Largest value of a sum of PAPRs of an L-STF and an L-LTF |
|---|---|---|
| [$PR_{80}$ $C_1$ $PR_{80}$ $C_2$ $PR_{80}$] | [1 -1 -1 -1 1 -1 -1 -1 -1 1 1 1] | 16.3812 |
| [$PR_{160}$ $C_1$ $PR_{80}$] | | |
| [$PR_{80}$ $C_1$ $PR_{160}$] | | |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 12-5. A largest value of a sum of PAPRs of the L-STF and the L-LTF that correspond to the sequence is a sum of PAPRs of the L-STF and the L-LTF when the sequence is used in Case 2/Case 4/Case 6. Specifically, the PAPR of the L-STF is 7.6524, and the PAPR of the L-LTF is 8.7288.
In still yet another implementation, the rotation factor sequence is [1 $C_1$ $C_2$... $C_{11}$], where Ci belongs to a rotation factor candidate value [1 -1]. An optimal rotation factor sequence shown in Table 12-6 is obtained through computer search.

**Table 12-6**

| No. | Sequence | Largest value of a sum of PAPRs of an L-STF and an L-LTF |
|---|---|---|
| 1 | [1 1 -1 1 -1 1 -1 -1 -1 -1 1 1] | 14.360672 |
| 2 | [11-1-1-1-11-11-111] | 14.360672 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 12-6.
Further, a rotation factor sequence that may be used may also be considered based on performance of another field such as an L-SIG, as shown in Table 12-7.

**Table 12-7**

| No. | Sequence | Largest value of a sum of PAPRs of an L-STF and an L-LTF |
|---|---|---|
| 1 | [1 1 1 -1 1 -1 -1 1 -1 1 1 1] | 14.721633 |
| 2 | [1 1 1 -1 1 -1 -1 -1 1 1 -1 1] | 14.711197 |
| 3 | [1 1 -1 1 -1 -1 -1 -1 1 1 -1] | 14.715868 |
| 4 | [1 1 1 -1 -1 1 -1 -1 -1 -1 1 1 -1] | 14.837849 |
| 5 | [1 1 -1 1 1 1 1 -1 1 -1 -1 -1] | 14.715868 |
| 6 | [1 1 -1 -1 -1 -1 -1 1 1 -1 1 -1] | 14.849636 |
| 7 | [1 -1 1 1 1 1 -1 1 1 -1 -1 -1] | 14.837849 |
| 8 | [1 -1 1 1 1 1 -1 1 -1 -1 -1 1] | 14.517473 |
| 9 | [1 -1 1 1 1 1 -1 -1 -1 -1 1 -1] | 14.738923 |
| 10 | [1 -1 1 1 -1 -1 -1 1 -1 1 1 1] | 14.711197 |

(continued)

| No. | Sequence | Largest value of a sum of PAPRs of an L-STF and an L-LTF |
|---|---|---|
| 11 | [1 -1 1 -1 -1 1 1 1 1 -1 -1] | 14.849636 |
| 12 | [1 -1 -1 1 -1 1 1 1 1 1 -1] | 14.377962 |
| 13 | [1 -1 -1 -1 1 -1 1 1 1 -1 1] | 14.517473 |
| 14 | [1 -1 -1 -1 -1 -1 -1 1 -1 1 1 -1] | 14.377962 |

In a further implementation, the rotation factor sequence is [1 $C_1$ $C_2$... $C_{11}$], where Ci belongs to a rotation factor candidate value [1 -1]. An optimal rotation factor sequence shown in Table 12-8 is obtained through computer search.

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 12-8.

**Table 12-8**

| No. | Sequence | Largest value of a sum of PAPRs of an L-STF and an L-LTF |
|---|---|---|
| 1 | [1 -1 -1 1 -1 1 1 1 1 1 -1] | 14.339721 |
| 2 | [1 -1 -1 -1 -1 -1 -1 1 -1 1 1 -1] | 14.339721 |

Further, a rotation factor sequence that may be used may also be considered based on performance of another field such as an L-SIG, as shown in Table 12-9.

**Table 12-9**

| No. | Sequence | Largest value of a sum of PAPRs of an L-STF and an L-LTF |
|---|---|---|
| 1 | [1 1 1 -1 1 -1 -1 -1 1 1 -1 1] | 14.711197 |
| 2 | [1 1 -1 1 -1 -1 -1 -1 1 1 -1] | 14.584147 |
| 3 | [1 1 1 -1 -1 1 -1 -1 -1 -1 1 -1] | 14.837849 |
| 4 | [1 1 -1 1 1 1 1 -1 1 -1 -1 -1] | 14.584147 |
| 5 | [1 1 -1 1 -1 1 -1 -1 -1 -1 1 1] | 14.370464 |
| 6 | [1 1 -1 -1 -1 -1 1 -1 1 -1 1 1] | 14.370464 |
| 7 | [1 -1 1 1 1 1 -1 1 1 -1 -1 -1] | 14.837849 |
| 8 | [1 -1 1 1 1 1 -1 1 -1 -1 -1 1] | 14.457495 |
| 9 | [1 -1 1 1 -1 -1 -1 1 -1 1 1 1] | 14.711197 |
| 11 | [1 -1 -1 -1 1 -1 1 1 1 1 -1 1] | 14.457495 |

In a still further implementation, the rotation factor sequence is [1 $C_1$ $C_2$... $C_{11}$], where $C_i$ belongs to a rotation factor candidate value [1 -1 j -j]. An optimal rotation factor sequence shown in Table 12-10 is obtained through computer search.

**Table 12-10**

| No. | Sequence | Largest value of a sum of PAPRs of an L-STF and an L-LTF |
|---|---|---|
| 1 | [1 j -1 -1 j -1 1 1 -j -j j -j -1] | 13.756267 |
| 2 | [1 j -j j j -1 1 -j 1 1 -j -1] | 13.756267 |
| 3 | [1 -j j -j -j -1 1 j 1 1 j -1] | 13.756267 |

(continued)

| No. | Sequence | Largest value of a sum of PAPRs of an L-STF and an L-LTF |
|-----|----------|---------------------------------------------------------|
| 4 | [1 -j -1 -1 -i -1 1 j j -j j -1] | 13.756267 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 12-10.

Further, a rotation factor sequence that may be used may also be considered based on performance of another field such as an L-SIG, as shown in Table 12-11.

**Table 12-11**

| No. | Sequence | Largest value of a sum of PAPRs of an L-STF and an L-LTF |
|-----|----------|---------------------------------------------------------|
| 1 | [1 1 1 j -j -j -1 1 j 1 -j j] | 14.04407 |
| 2 | [1 1 1 -j j j -1 1 -j 1 j -j] | 14.04407 |
| 3 | [1 1 j -1 j j j -j j 1 -j j] | 14.17253 |
| 4 | [1 1 j -1 j j j -j j 1 -j j] | 14.19923 |
| 5 | [1 1 j -1 j j -1 1 1 -j j -j] | 13.76654 |
| 6 | [1 1 j -1 -1 -1 1 1 -1 -j -1 j -j] | 14.00937 |
| 7 | [1 1 -1 -1 -1 -1 1 1 -1 j -j j -1] | 14.17253 |
| 8 | [1 1 -1 -1 -1 -1 1 1 -1 -j j -j -1] | 14.17253 |
| 9 | [1 1 -j -1 1 1 -j -1 -j 1 j 1 j] | 14.17253 |
| 10 | [1 1 -j -1 -1 -1 1 1 -1 j -1 -j j] | 14.00937 |
| 11 | [1 1 -j -1 -j -j -1 1 1 j 1 -j j] | 13.76654 |
| 12 | [1 1 -j -1 -j -j -j j -j 1 j -j] | 14.19923 |
| 13 | [1 j 1 j -1 -j -1 j j 1 -j j] | 14.17253 |
| 14 | [1 j 1 j -1 -j -1 j -j -1 j j] | 14.17253 |
| 15 | [1 j j j 1 1 1 -1 1 -1 -1 1] | 14.17253 |
| 16 | [1 j j j -1 -j -1 j j -j j 1] | 14.13687 |
| 17 | [1 j j j -j 1 1 -j 1 -1 j 1] | 13.86039 |
| 18 | [1 j j j -j 1j 1 j j -j -1] | 14.15416 |
| 19 | [1 j -1 1 -j 1 1 -j j j j 1] | 13.86039 |
| 20 | [1 j -1 -1 j -1 1 -j j j -j -1] | 13.75627 |
| 21 | [1 j -1 -j -1 -j j 1 j 1 -j -1] | 14.16877 |
| 22 | [1 j -j j 1-1 1 1 1 1-1-1] | 14.17253 |
| 23 | [1 j -j j j -1 1 -j 1 1 -j -1] | 13.75627 |
| 24 | [1 j -j j j -1 -j -1 j j j 1] | 14.13687 |
| 25 | [1 j -j j -1 j -1 j -j -j -j -1] | 14.15416 |
| 26 | [1 -1 1 j j -j -1 -1 -j -1 j j] | 13.76654 |
| 27 | [1-1 1 -j -j j -1 -1 j -1 -j -j] | 13.76654 |
| 28 | [1 -1 j 1 1 -j -1 -j 1 j 1 j] | 14.17253 |

36

(continued)

| No. | Sequence | Largest value of a sum of PAPRs of an L-STF and an L-LTF |
|---|---|---|
| 29 | [1 -1 j 1 j -j j j j -1 -j -j] | 14.00937 |
| 30 | [1 -1 j 1 j -j -1-1 1 j j j] | 14.04407 |
| 31 | [1 -1 j 1-1 1 1 1 -j 1 j j] | 14.19923 |
| 32 | [1 -1 -1 1 -1 1 1 1 j j j 1] | 14.17253 |
| 33 | [1 -1 -1 1 -1 1 1 -j -j -j 1] | 14.17253 |
| 34 | [1 -1 -j 1 1 j -1 j 1 -j 1 -j] | 14.17253 |
| 35 | [1-1-j 1 -1 1 1 1 j 1 -j -j] | 14.19923 |
| 36 | [1-1 -j 1 -j j -1 -1 1 -j -j -j] | 14.04407 |
| 37 | [1-1 -j 1 -j j -j -j -j -1 j j] | 14.00937 |
| 38 | [1 -j 1 j -1 j -1 j j -1 j -j] | 14.17253 |
| 39 | [1-j 1 -j -1 j -1 j j 1 j -j] | 14.17253 |
| 40 | [1 -j j -j 1-1 1 1 1 1-1-1] | 14.17253 |
| 41 | [1 -j j -j -1 j -1 -j j j j -1] | 14.15416 |
| 42 | [1 -j j -j -j -1 1 j 1 1 j -1] | 13.75627 |
| 43 | [1 -j j -j -j -1 j -1 -j -j -j 1] | 14.13687 |
| 44 | 1 -j -1 1 j 1 1 j -j -j -j 1] | 13.86039 |
| 45 | [1 -j -1 j -1 j -j 1 -j 1 j -1] | 14.16877 |
| 46 | [1 -j -1 -1 -j -1 1 j j -j j -1] | 13.75627 |
| 47 | [1 -j -j -j 1 1 1-1 1-1 -1 1] | 14.17253 |
| 48 | [1 -j -j -j j 1 1 j 1 -1 -j 1] | 13.86039 |
| 49 | [1 -j -j -j j 1 -j 1 j -j j -1] | 14.15416 |
| 50 | [1 -j -j -j -1 j -1 -j -j j -j 1] | 14.13687 |

In a yet further implementation, the rotation factor sequence is [1 $C_1$ $C_2$... $C_{11}$], where $C_i$ belongs to a rotation factor candidate value [1 -1 j -j]. An optimal rotation factor sequence shown in Table 12-12 is obtained through computer search.

**Table 12-12**

| No. | Sequence | Largest value of a sum of PAPRs of an L-STF and an L-LTF |
|---|---|---|
| 1 | [1 j -1 -1 j -1 1 -j -j j -j -1] | 13.676386 |
| 2 | [1 j -j j j -1 1 -j 1 1 -j -1] | 13.676386 |
| 3 | [1 -j j -j -j -1 1 j 1 1 j -1] | 13.676386 |
| 4 | [1 -j -1 -1 -j -1 1 j j -j j -1] | 13.676386 |

Specifically, for the 10 cases in Table 12-1, a sum of PAPRs that are of the L-STF and the L-LTF and that are obtained by using all rotation factor sequences obtained through computer search is calculated, and a largest value of the sum of PAPRs of the L-STF and the L-LTF in the 10 cases (namely, a sum of PAPRs of the L-STF and the L-LTF in a worst case) is obtained. Then, MAX PAPRs corresponding to all the rotation factor sequences are compared, and a rotation factor sequence corresponding to a smallest value in the MAX PAPRs is obtained and used as an optimal rotation factor sequence, namely, the sequence shown in Table 12-12.

Further, a rotation factor sequence that may be used may also be considered based on performance of another field such as an L-SIG, as shown in Table 12-13.

**Table 12-13**

| No. | Sequence | Largest value of a sum of PAPRs of an L-STF and an L-LTF |
|---|---|---|
| 1 | [1 1 1 j -j -j -1 1 j 1 -j j] | 13.777908 |
| 2 | [1 1 1-j j j -1 1 -j 1 j -j] | 13.777908 |
| 3 | [1 1 j -1 1 j -1 j 1-j 1-j] | 14.172528 |
| 4 | [1 1 j -1 j j -1 1 1 -j j -j] | 13.76654 |
| 5 | [1 1 j -1 -1 1 1 -1 -j -1 j -j] | 14.024944 |
| 6 | [1 1 -1 1 j j 1-1 111-1] | 14.172528 |
| 7 | [1 -1 -j -j 1 -1 1 1 -1] | 14.172528 |
| 8 | [1 1 -1 -1 -1 -1 1 -1 j -j j -1] | 14.172528 |
| 9 | [1 1 -1 -1 -1 -1 1 -1 -j j -j -1] | 14.172528 |
| 10 | [1 1 -j -1 1 1 -j -1 j 1 1 j] | 14.172528 |
| 11 | [1 1 -j -1 -1 1 1 -1 j -1 -j j] | 14.024944 |
| 12 | [1 1 -j -1 -j -j -1 1 1 j -j j] | 13.76654 |
| 13 | [1 j 1 j -1 j -1 j j 1 -j j] | 14.172528 |
| 14 | [1 j 1 j -1 -j -1 j -j -1 j j] | 14.172528 |
| 15 | [1 j 1 -j 1 j j -1 -1 -j 1 -j] | 14.172528 |
| 16 | [1 j 1 -j -j 1 -1 j 1 j -1 j] | 14.172528 |
| 17 | [1 j j j 1 1 1 -1 1 -1 -1 1] | 14.172528 |
| 18 | [1 j j j -1 -j -1 j j -j j 1] | 14.122754 |
| 19 | [1 j j j -j 1 1 -j 1 -1 j 1] | 13.803038 |
| 20 | [1 j -1 1 -j 1 1 -j j j j 1] | 13.803038 |
| 21 | [1 j -1 -j -1 -j j 1 j 1 -j -1] | 14.098957 |
| 22 | [1 j -j j 1-1 1 1 1 1-1-1] | 14.172528 |
| 23 | [1 j -j j j -1 -j -1 j j j 1] | 14.122754 |
| 24 | [1 -1 1 j j -j -1 -1 -j -1 j j] | 13.76654 |
| 25 | [1-1 1 -j -j j -1 -1 j -1 -j -j] | 13.76654 |
| 26 | [1 -1 j 1 1 -j -1 -j 1 j 1 j] | 14.172528 |
| 27 | [1 -1 j 1 j -j j j j -1 -j -j] | 14.024944 |
| 28 | [1 -1 j 1 j -j -1 -1 1 j j j] | 13.777908 |
| 29 | [1 -1 -1 1 -1 1 1 1 j j j 1] | 14.172528 |
| 30 | [1 -1 -1 1 -1 1 1 -j -j -j 1] | 14.172528 |
| 31 | [1 -1 -1 -1 1 -1 j j -1 1-1-1] | 14.172528 |
| 32 | [1-1-1-1 1-1 -j-j-1 1-1-1] | 14.172528 |
| 33 | [1 -1 -j 1 1 j -1 j 1-j 1-j] | 14.172528 |
| 34 | [1-1 -j 1 -j j -1 -1 1 -j -j -j] | 13.777908 |
| 35 | [1-1 -j 1 -j j -j -j -j -1 j j] | 14.024944 |
| 36 | [1 -j 1 j 1 -j j -1 -1 j 1 j] | 14.172528 |
| 37 | [1 -j 1 j j 1 -1 -j 1 -j -1 -j] | 14.172528 |

(continued)

| No. | Sequence | Largest value of a sum of PAPRs of an L-STF and an L-LTF |
|---|---|---|
| 38 | [1 -j 1 j -1 j -1 j j -1 j -j] | 14.172528 |
| 39 | [1-j 1-j -1 j -1 j -j 1 j -j] | 14.172528 |
| 40 | [1-jj -j 1 -1 1 1 1 1-1-1] | 14.172528 |
| 41 | [1 -j j -j -j -1 j -1 -j -j -j 1] | 14.122754 |
| 42 | [1 -j -1 1 j 1 1 j -j -j -j 1] | 13.803038 |
| 43 | [1 -j -1 j -1 j -j 1 j 1 j -1] | 14.098957 |
| 44 | [1 -j -j -j 1 1 1-1 1-1-1 1] | 14.172528 |
| 45 | [1 -j -j -j j 1 1 j 1 -1 -j 1] | 13.803038 |
| 46 | [1 -j -j -j -1 j -1 -j -j j j -j 1] | 14.122754 |

It should be understood that a PAPR value of any one of the foregoing rotation factor sequences is not unique, in other words, the PAPR shown above is one PAPR value of the rotation factor sequence. When parameters (for example, a puncturing scenario and a Fourier transform parameter) of designed sequences are different, a same rotation factor sequence may have different PAPR values.

In this embodiment of this application, the wireless communication device may generate and send the PPDU with the bandwidth of X MHz greater than 160 MHz, where the bandwidth of X MHz includes n bandwidths of Y MHz, some or all fields in the PPDU are rotated in the n bandwidths of Y MHz by using the rotation factor sequence, the rotation factor sequence includes n rotation factors, and each bandwidth of Y MHz is corresponding to one rotation factor. In this way, a PAPR of the PPDU can be reduced by using the rotation factor sequence. In addition, when X MHz is 240 MHz or 320 MHz, the PAPR of the PPDU may be further reduced by using the rotation factor sequence provided in this embodiment of this application, so that PAPRs of some fields or all fields of the PPDU are optimal.

The foregoing describes the solutions provided in embodiments of this application. It may be understood that, to implement the foregoing functions, a PPDU transmission apparatus (for example, an AP or a STA) includes corresponding hardware structures and/or software modules for performing the functions. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the PPDU transmission apparatus may be divided into functional modules based on the foregoing method examples. For example, each functional module corresponding to each function may be obtained through division, or two or more functions may be integrated into one processing module. The functional module may be implemented in a form of hardware, or may be implemented in a form of a software functional module. It should be noted that, in embodiments of this application, module division is an example, and is merely a logical function division. During actual implementation, another division manner may be used. The following uses division of each functional module based on a corresponding function as an example for description:

A schematic diagram of a possible structure of a PPDU transmission apparatus is shown in FIG. 6. The PPDU transmission apparatus 600 includes a generation unit 61 and a sending unit 62. The generation unit 61 is configured to support the PPDU transmission apparatus in performing step S301 in the foregoing embodiment. The sending unit 62 is configured to support the PPDU transmission apparatus in performing step S302 in the foregoing embodiment. All related content of each step involved in the foregoing method embodiment may be referenced to a function description of a corresponding functional module, and details are not described herein again.

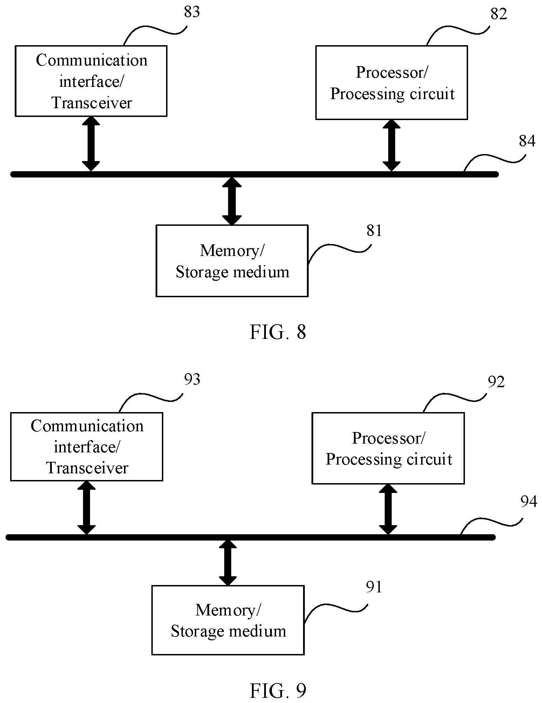

A possible schematic diagram of a structure of a PPDU transmission apparatus is shown in FIG. 7. The PPDU transmission apparatus 700 includes a receiving unit 71 and a processing unit 72. The receiving unit 71 is configured to support the PPDU transmission apparatus in performing step S302 in the foregoing embodiment. The processing unit 72 is configured to support the PPDU transmission apparatus in performing step S303 in the foregoing embodiment. All related content of each step involved in the foregoing method embodiment may be referenced to a function description of a corresponding functional module, and details are not described herein again. FIG. 8 is a schematic diagram of a possible structure of a product form of the PPDU transmission apparatus according to an embodiment of this application.

In a possible product form, the PPDU transmission apparatus may be an information transmission device, and the PPDU transmission apparatus includes a processor 82 and a transceiver 83. The processor 82 is configured to control and manage an action of the PPDU transmission apparatus, for example, configured to support the PPDU transmission apparatus in performing step S301 in the foregoing embodiment, and/or configured to perform another technical process described in this specification. The transceiver 83 is configured to support the PPDU transmission apparatus in performing step S302 in the foregoing embodiment. Optionally, the PPDU transmission apparatus may further include a memory 81.

In another possible product form, the PPDU transmission apparatus may be an information transmission board, and the PPDU transmission apparatus includes a processor 82 and a transceiver 83. The processor 82 is configured to control and manage an action of the PPDU transmission apparatus, for example, configured to support the PPDU transmission apparatus in performing step S301 in the foregoing embodiment, and/or configured to perform another technical process described in this specification. The transceiver 83 is configured to support the PPDU transmission apparatus in performing step S302 in the foregoing embodiment. Optionally, the PPDU transmission apparatus may further include a memory 81.

In still another possible product form, the PPDU transmission apparatus is also implemented by a general-purpose processor, namely, a chip. The general-purpose processor includes a processing circuit 82 and a communication interface 83. Optionally, the general-purpose processor may further include a storage medium 81.

In yet another possible product form, the PPDU transmission apparatus may be implemented by using the following: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described throughout this application.

The processor 82 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 84 may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one thick line represents the bus in FIG. 8, but this does not mean that there is only one bus or only one type of bus.

FIG. 9 is a schematic diagram of a possible structure of a product form of the PPDU transmission apparatus according to an embodiment of this application.

In a possible product form, the PPDU transmission apparatus may be an information transmission device, and the PPDU transmission device includes a processor 92 and a transceiver 93. The processor 92 is configured to control and manage an action of the PPDU transmission apparatus, for example, configured to support the PPDU transmission apparatus in performing step S303 in the foregoing embodiment, and/or configured to perform another technical process described in this specification. The transceiver 93 is configured to support the PPDU transmission apparatus in performing step S302 in the foregoing embodiment. Optionally, the PPDU transmission device may further include a memory 91.

In another possible product form, the PPDU transmission apparatus may be an information transmission board, and the PPDU transmission board includes a processor 92 and a transceiver 93. The processor 92 is configured to control and manage an action of the PPDU transmission apparatus, for example, configured to support the PPDU transmission apparatus in performing step S303 in the foregoing embodiment, and/or configured to perform another technical process described in this specification. The transceiver 93 is configured to support the PPDU transmission apparatus in performing step S302 in the foregoing embodiment. Optionally, the PPDU transmission board may further include a memory 91.

In still another possible product form, the PPDU transmission apparatus is also implemented by a general-purpose processor, namely, a chip. The general-purpose processor includes a processing circuit 92 and a communication interface 93. Optionally, the general-purpose processor may further include a storage medium 91.

In yet another possible product form, the PPDU transmission apparatus may also be implemented by using one or more FPGAs, a PLD, a controller, a state machine, gate logic, a discrete hardware component, any other suitable circuit, or any combination of circuits that can implement various functions described in this application.

The processor 92 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The bus 94 may be a PCI bus, an EISA bus, or the like. The bus may be classified into an address bus, a data bus, a control bus, and the like. For ease of representation, only one thick line represents the bus in FIG. 9, but this does not mean that there is only one bus or only one type of bus.

A person of ordinary skill in the art may understand that all or some of the steps of the method embodiments may be implemented by a program instructing relevant hardware. The program instructions may be stored in a computer-readable storage medium. When the program instructions are run, the steps of the method embodiments are performed. The foregoing storage medium includes any medium that can store program code, such as a USB flash drive, a removable hard disk, a ROM, a RAM, a magnetic disk, or an optical disc.

In one aspect, an embodiment of this application further provides a readable storage medium. The readable storage medium stores computer-executable instructions, and when the computer-executable instructions are run, a device (which may be a single-chip microcomputer, a chip, a controller, or the like) or a processor is enabled to perform the steps in the PPDU transmission method provided in this application.

In one aspect, an embodiment of this application further provides a computer program product. The computer program product includes a computer-executable instruction, and the computer-executable instruction is stored in a computer-readable storage medium, at least one processor of a device may read the computer-executable instruction from the computer-readable storage medium, and the at least one processor executes the computer-executable instruction, so that the device performs the steps in the PPDU transmission method provided in this application.

In an embodiment of this application, an information processing apparatus may generate a PPDU with a bandwidth of X MHz greater than 160 MHz and send the PPDU. The bandwidth of X MHz includes n bandwidth of Y MHz, some or all fields in the PPDU are rotated in the n bandwidths of Y MHz by using a rotation factor sequence, the rotation factor sequence includes n rotation factors, and each bandwidth of Y MHz is corresponding to one rotation factor, so that a PAPR of the PPDU can be reduced by using the rotation factor sequence. In addition, when X MHz is 240 MHz or 320 MHz, the PAPR of the PPDU may be further reduced by using the rotation factor sequence provided in this embodiment of this application, so that PAPRs of some fields or all fields of the PPDU are optimal.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, division into the units is merely logical function division and may be another division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium, or transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a read-only memory (read-only memory, ROM), a random access memory (random access memory, RAM), or a magnetic medium, for example, a floppy disk, a hard disk, a magnetic tape, a magnetic disk, or an optical medium, for example, a digital versatile disc (digital versatile disc, DVD), or a semiconductor medium, for example, a solid-state disk (solid state disk, SSD).

**Claims**

1.  A PPDU transmission method, wherein the method comprises:

    generating a physical layer protocol data unit PPDU with a bandwidth of X MHz, wherein X > 160, some or all fields in the PPDU are rotated in the bandwidth of X MHz by using a rotation factor sequence, the bandwidth of X MHz comprises n bandwidths of Y MHz, the rotation factor sequence comprises n rotation factors, and each bandwidth of Y MHz is corresponding to one rotation factor; and
    sending the PPDU with the bandwidth of X MHz.

2.  A PPDU transmission method, wherein the method comprises:

    receiving a physical layer protocol data unit PPDU with a bandwidth of X MHz, wherein X > 160, some or all fields in the PPDU are rotated in the bandwidth of X MHz by using a rotation factor sequence, the bandwidth of X MHz comprises n bandwidths of Y MHz, the rotation factor sequence comprises n rotation factors, and each bandwidth of Y MHz is corresponding to one rotation factor; and
    performing rotation recovery on the PPDU based on the rotation factor sequence.

3.  The method according to claim 1 or 2, wherein the X MHz is any one of 240 MHz or 320 MHz.

4.  The method according to any one of claims 1 to 3, wherein one or more fields in a legacy short training field L-STF, a legacy long training field L-LTF, a legacy signal field L-SIG, a repeated legacy signal field RL-SIG, a universal signal field U-SIG, or an extremely high throughput signal field EHT-SIG that are comprised in the PPDU are duplicated in the n bandwidths of Y MHz; and the one or more fields in the L-STF, L-LTF, L-SIG, U-SIG, and EHT-SIG are rotated by using the rotation factor sequence.

5.  The method according to any one of claims 1 to 4, wherein Y=20 MHz, and the first four rotation factors in the rotation factor sequence are [1 -1 -1 -1]; or
    Y=20 MHz, and the first eight rotation factors in the rotation factor sequence are [1 -1 -1 -1 1 -1 -1 -1].

6.  The method according to any one of claims 1 to 4, wherein X=320, and the rotation factor sequence is [$PR_{80}$ $C_1 PR_{80}$ $C_2 PR_{80}$ $C_3 PR_{80}$], wherein $PR_{80}$ is a rotation factor [1 -1 -1 -1] of a bandwidth of 80 MHz, $C_1$ is 1, -1, j, or -j, $C_2$ is 1, -1, j, or -j, and $C_3$ is 1, -1, j, or j.

7.  The method according to any one of claims 1 to 5, wherein $C_1$=1, $C_2$=-1, $C_3$=-1, and the rotation factor sequence is [1 -1 -1 -1 1 -1 -1 -1 -1 1 1 1 -1 1 1 1].

8.  The method according to claim 6 or 7, wherein there are one or more of the following puncturing patterns for 320 MHz:

| case 1 | 280 MHz [x x 1 1 1 1 1 1 1 1 1 1 1 1 1 1] |
|---|---|
| case 2 | 280 MHz [1 1 x x 1 1 1 1 1 1 1 1 1 1 1 1] |
| case 3 | 280 MHz [1 1 1 1 x x 1 1 1 1 1 1 1 1 1 1] |
| case 4 | 280 MHz [1 1 1 1 1 1 x x 1 1 1 1 1 1 1 1] |
| case 5 | 280 MHz [1 1 1 1 1 1 1 1 x x 1 1 1 1 1 1] |
| case 6 | 280 MHz [1 1 1 1 1 1 1 1 1 1 x x 1 1 1 1] |
| case 7 | 280 MHz [1 1 1 1 1 1 1 1 1 1 1 1 x x 1 1] |
| case 8 | 280 MHz [1 1 1 1 1 1 1 1 1 1 1 1 1 1 x x] |
| case 9 | 240 MHz [1 1 1 1 x x x x 1 1 1 1 1 1 1 1] |
| case 10 | 240 MHz [1 1 1 1 1 1 1 1 x x x x 1 1 1 1] |
| case 11 | 240 MHz [1 1 1 1 1 1 1 1 1 1 1 1 x x x x] |
| case 12 | 240 MHz [x x x x 1 1 1 1 1 1 1 1 1 1 1 1] |

wherein 1 or x represents one 20 MHz in the 320 MHz, "1" indicates that the 20 MHz is not punctured, "x" indicates that the 20 MHz is punctured, "240 MHz" or "280 MHz" indicates a size of a frequency occupied after the 320 MHz is punctured, and 20 MHz in "[]" is sorted in a sequence from a low frequency to a high frequency or from a high frequency to a low frequency in 320 MHz.

9. The method according to claim 6 or 7, wherein there are one or more of the following puncturing patterns for 320 MHz:

| case 1 | 280 MHz [x x 1 1 1 1 1 1 1 1 1 1 1 1] |
|---|---|
| case 2 | 280 MHz [1 1 x x 1 1 1 1 1 1 1 1 1 1] |
| case 3 | 280 MHz [1 1 1 1 x x 1 1 1 1 1 1 1 1] |
| case 4 | 280 MHz [1 1 1 1 1 1 x x 1 1 1 1 1 1] |
| case 5 | 280 MHz [1 1 1 1 1 1 1 1 x x 1 1 1 1] |
| case 6 | 280 MHz [1 1 1 1 1 1 1 1 1 1 x x 1 1] |
| case 7 | 280 MHz [1 1 1 1 1 1 1 1 1 1 1 x x 1 1] |
| case 8 | 280 MHz [1 1 1 1 1 1 1 1 1 1 1 1 x x] |
| case 9 | 240 MHz [1 1 1 1 x x x x 1 1 1 1 1 1] |
| case 10 | 240 MHz [1 1 1 1 1 1 1 1 x x x x 1 1 1] |
| case 11 | 240 MHz [1 1 1 1 1 1 1 1 1 1 1 1 x x x x] |
| case 12 | 240 MHz [x x x x 1 1 1 1 1 1 1 1 1 1] |
| case 13 | 160 MHz [1 1 1 1 1 1 1 1 x x x x x x x x] |
| case 14 | 160 MHz [x x x x x x x x 1 1 1 1 1 1 1 1] |

wherein 1 or x represents one 20 MHz in the 320 MHz, "1" indicates that the 20 MHz is not punctured, "x" indicates that the 20 MHz is punctured, "280 MHz", "240 MHz", or "160 MHz" indicates a size of a frequency occupied after the 320 MHz is punctured, and 20 MHz in "[]" is sorted in a sequence from a low frequency to a high frequency or from a high frequency to a low frequency in 320 MHz.

10. The method according to claim 6 or 7, wherein there are one or more of the following puncturing patterns for 320 MHz:

| case 1 | 320 MHz [1 1 1 1 1 1 1 1 1 1 1 1 1 1 1 1] |
|---|---|
| case 2 | 280 MHz [x x 1 1 1 1 1 1 1 1 1 1 1 1 1 1] |
| case 3 | 280 MHz [1 1 x x 1 1 1 1 1 1 1 1 1 1 1 1] |
| case 4 | 280 MHz [1 1 1 1 x x 1 1 1 1 1 1 1 1 1 1] |
| case 5 | 280 MHz [1 1 1 1 1 1 x x 1 1 1 1 1 1 1 1] |
| case 6 | 280 MHz [1 1 1 1 1 1 1 1 x x 1 1 1 1 1 1] |
| case 7 | 280 MHz [1 1 1 1 1 1 1 1 1 1 x x 1 1 1 1] |
| case 8 | 280 MHz [1 1 1 1 1 1 1 1 1 1 1 1 x x 1 1] |
| case 9 | 280 MHz [1 1 1 1 1 1 1 1 1 1 1 1 1 1 x x] |
| case 10 | 240 MHz [1 1 1 1 x x x x 1 1 1 1 1 1 1 1] |
| case 11 | 240 MHz [1 1 1 1 1 1 1 1 x x x x 1 1 1 1] |
| case 12 | 240 MHz [1 1 1 1 1 1 1 1 1 1 1 1 x x x x] |
| case 13 | 240 MHz [x x x x 1 1 1 1 1 1 1 1 1 1 1 1] |
| case 14 | 160 MHz [1 1 1 1 1 1 1 1 x x x x x x x x] |
| case 15 | 160 MHz [x x x x x x x x 1 1 1 1 1 1 1 1] |

wherein 1 or x represents one 20 MHz in the 320 MHz, "1" indicates that the 20 MHz is not punctured, "x" indicates that the 20 MHz is punctured, "320 MHz", "280 MHz", "240 MHz", or "160 MHz" indicates a size of a frequency occupied after the 320 MHz is punctured, and 20 MHz in "[]" is sorted in a sequence from a low frequency to a high frequency or from a high frequency to a low frequency in 320 MHz.

11. The method according to claim 6 or 7, wherein there are one or more of the following puncturing patterns for 320 MHz:

| case 1 | 320 MHz [1 1 1 1 1 1 1 1 1 1 1 1 1 1 1 1] |
|---|---|
| case 2 | 280 MHz [x x 1 1 1 1 1 1 1 1 1 1 1 1 1 1] |
| case 3 | 280 MHz [1 1 x x 1 1 1 1 1 1 1 1 1 1 1 1] |
| case 4 | 280 MHz [1 1 1 1 x x 1 1 1 1 1 1 1 1 1 1] |
| case 5 | 280 MHz [1 1 1 1 1 1 x x 1 1 1 1 1 1 1 1] |
| case 6 | 280 MHz [1 1 1 1 1 1 1 1 x x 1 1 1 1 1 1] |
| case 7 | 280 MHz [1 1 1 1 1 1 1 1 1 1 x x 1 1 1 1] |
| case 8 | 280 MHz [1 1 1 1 1 1 1 1 1 1 1 1 x x 1 1] |
| case 9 | 280 MHz [1 1 1 1 1 1 1 1 1 1 1 1 1 1 x x] |
| case 10 | 240 MHz [1 1 1 1 x x x x 1 1 1 1 1 1 1 1] |
| case 11 | 240 MHz [1 1 1 1 1 1 1 1 x x x x 1 1 1 1] |
| case 12 | 240 MHz [1 1 1 1 1 1 1 1 1 1 1 1 x x x x] |
| case 13 | 240 MHz [x x x x 1 1 1 1 1 1 1 1 1 1 1 1] |

wherein 1 or x represents one 20 MHz in the 320 MHz, "1" indicates that the 20 MHz is not punctured, "x" indicates that the 20 MHz is punctured, "320 MHz", "280 MHz", or "240 MHz" indicates a size of a frequency occupied after the 320 MHz is punctured, and 20 MHz in "[]" is sorted in a sequence from a low frequency to a high frequency or from a high frequency to a low frequency in 320 MHz.

12. The method according to any one of claims 1 to 5, wherein X=320, and the rotation factor sequence is any one of the following sequences: [1 -1 -1 -1 j j j -1 j -1 j 1 j -1 j -j], [1 -1 -1 -1 1 -1 -1 -1 -1 -1 1 1 -1 1 -1 j], [1 -1 -1 -1 j -1 1 j j 1 -1 j -1 -1 -1 1], [1 -1 -1 -1 1 1 -1 -1 -1 -1 -1 -1 1 -1 1 1], [1 -1 -1 -1 j j j -1 j -1 -j j -j j 1 - j], [1 -1 -1 -1 1 -1 -1 -1 -1 -1 -1 1 -1 1 1 -1], [1 -1 -1 -1 1 -1 -1 -1 -1 1 1 1 -1 1 1 1], [1 -1 -1 -1 -1 -1 -1 1 1 1 -11-111 -1], [1 -1 -1 -1 1 -1 -1 -1 -1 -1-11-111 -1], [1-1-1-11-1-1-1111-1111], [1 -1 -1 -1 -1-1-1111-11-111 -1], [1 -1 -1 -1 1 -1 -1 -1 -1 -1-11-111 -1], [1 -1 -1 -11-1-1-1-1111-111 1], [1 -1 -1 -1 j 1 -1 j -1 -j -1 j j j -1 1], and [1 -1 -1 -1 1 -1 -1 -1 -1 -1 1 -1 1 1 -1].

13. The method according to any one of claims 1 to 5, wherein X=240, and the rotation factor sequence is any one of the following sequences: [1 -1 -1 -1 1-1 1 1-1 1 1 1], [1 j -j -1 -1 -j -j -1 -1 -j j 1], [1 -1 1 11-11-1 -1 1 1 1], [1 1 1 -1 -1 1 -1 1 1 1 -1 1], [1 -1 -1 -1 j 1 -j 1 1 1 -1 1], [1 -1 -1 1 1 1 -1 1 1 -1 1], [1 1 1 1 -1 -1 1 1 - 1 1 -1 1], [1 -1 -1 -1 1 -1 -1 -1 -1 1 j 1], [1 -1 -1 -1 -1 -1 1 -1 1 1 -1], [1 1 -1 j -1 -1 -jj -1 j j -j], [1 -1 - 1 1 -1 -1 -1 j -1 -1 1], [1 -1 -1 -1 1 -1 -1-111 1], [1 -1 -1 -1 -1 -1-11-111 -1], [11-11-11 -1 -1 - 1 1 1], [1 -1 -1 1 1 -1 -1 -1 j -1 -1 1], [1 -1 -1 -1 1 -1 -1 -1-111 1], [1 -1 -1 -1 -1 -1-11-111 -1], [1 1 -1 1-11-1 -1 -1 -1 1 1], [1 -1 -1 -1 1 -1 -1 -1 j -1 -1 1], [1 -1 -1 -1 1 -1 -1 -1-111 1], [1 -1 -1 -1 -1 -1 -1 1- 1 1 1 -1], [1 j -1j 1j 1j 1 -j -1], [1 -1 -1 -1 1 -1 -1 -1 j -1 -1 1], and [1 -1 -1 -1 1 -1 -1 -1 1 1 1].

14. A PPDU transmission apparatus, wherein the apparatus comprises:

a generation unit, configured to generate a physical layer protocol data unit PPDU with a bandwidth of X MHz, wherein X > 160, some or all fields in the PPDU are rotated in the bandwidth of X MHz by using a rotation factor sequence, the bandwidth of X MHz comprises n bandwidths of Y MHz, the rotation factor sequence comprises n rotation factors, and each bandwidth of Y MHz is corresponding to one rotation factor; and
a sending unit, configured to send the PPDU with the bandwidth of X MHz.

15. A PPDU transmission apparatus, wherein the apparatus comprises:

a receiving unit, configured to receive a physical layer protocol data unit PPDU with a bandwidth of X MHz, wherein X > 160, some or all fields in the PPDU are rotated in the bandwidth of X MHz by using a rotation factor sequence, the bandwidth of X MHz comprises n bandwidths of Y MHz, the rotation factor sequence comprises n rotation factors, and each bandwidth of Y MHz is corresponding to one rotation factor; and

a processing unit, configured to perform rotation recovery on the PPDU based on the rotation factor sequence.

16. The PPDU transmission apparatus according to claim 10 or 11, wherein the X MHz is any one of the following: 240 MHz or 320 MHz.

17. The PPDU transmission apparatus according to any one of claims 10 to 12, wherein one or more fields in a legacy short training field L-STF, a legacy long training field L-LTF, a legacy signal field L-SIG, a repeated legacy signal field RL-SIG, a universal signal field U-SIG, or an extremely high throughput signal field EHT-SIG that are comprised in the PPDU are duplicated in the n bandwidths of Y MHz; and the one or more fields in the L-STF, L-LTF, L-SIG, U-SIG, and EHT-SIG are rotated by using the rotation factor sequence.

18. The PPDU transmission apparatus according to any one of claims 14 to 17, wherein Y=20 MHz, and the first four rotation factors in the rotation factor sequence are [1 -1 -1 -1]; or

Y=20 MHz, and the first eight rotation factors in the rotation factor sequence are [1 -1 -1 -1 1 -1 -1 -1].

19. The PPDU transmission apparatus according to any one of claims 14 to 18, wherein X=320, and the rotation factor sequence is $[PR_{80} \ C_1 PR_{80} \ C_2 PR_{80} \ C_3 PR_{80}]$, wherein $PR_{80}$ is a rotation factor [1 -1 -1 -1] of a bandwidth of 80 MHz, $C_1$ is 1, -1, j, or -j, $C_2$ is 1, -1, j, or -j, and $C_3$ is 1, -1, j, or -j.

20. The PPDU transmission apparatus according to any one of claims 14 to 19, wherein $C_1$=1, $C_2$=-1, $C_3$=-1, and the rotation factor sequence is [1 -1 -1 -1 1 -1 -1 -1 -1 1 1 1 -1 1 1 1].

21. The PPDU transmission apparatus according to claim 19 or 20, wherein there are any one or more of the following puncturing patterns for 320 MHz:

| case 1 | 280 MHz [x x 1 1 1 1 1 1 1 1 1 1 1 1 1 1] |
|---|---|
| case 2 | 280 MHz [1 1 x x 1 1 1 1 1 1 1 1 1 1 1 1] |
| case 3 | 280 MHz [1 1 1 1 x x 1 1 1 1 1 1 1 1 1 1] |
| case 4 | 280 MHz [1 1 1 1 1 1 x x 1 1 1 1 1 1 1 1] |
| case 5 | 280 MHz [1 1 1 1 1 1 1 1 x x 1 1 1 1 1 1] |
| case 6 | 280 MHz [1 1 1 1 1 1 1 1 1 1 x x 1 1 1 1] |
| case 7 | 280 MHz [1 1 1 1 1 1 1 1 1 1 1 1 x x 1 1] |
| case 8 | 280 MHz [1 1 1 1 1 1 1 1 1 1 1 1 1 1 x x] |
| case 9 | 240 MHz [1 1 1 1 x x x x 1 1 1 1 1 1 1 1] |
| case 10 | 240 MHz [1 1 1 1 1 1 1 1 x x x x 1 1 1 1] |
| case 11 | 240 MHz [1 1 1 1 1 1 1 1 1 1 1 1 x x x x] |
| case 12 | 240 MHz [x x x x 1 1 1 1 1 1 1 1 1 1 1 1] |

wherein 1 or x represents one 20 MHz in the 320 MHz, "1" indicates that the 20 MHz is not punctured, "x" indicates that the 20 MHz is punctured, "240 MHz" or "280 MHz" indicates a size of a frequency occupied after the 320 MHz is punctured, and 20 MHz in "[]" is sorted in a sequence from a low frequency to a high frequency or from a high frequency to a low frequency in 320 MHz.

22. The PPDU transmission apparatus according to claim 19 or 20, wherein there are any one or more of the following puncturing patterns for 320 MHz:

| case 1 | 280 MHz [x x 1 1 1 1 1 1 1 1 1 1 1 1 1 1] |
|---|---|

(continued)

| | |
|---|---|
| case 2 | 280 MHz [1 1 x x 1 1 1 1 1 1 1 1 1 1] |
| case 3 | 280 MHz [1 1 1 1 x x 1 1 1 1 1 1 1 1] |
| case 4 | 280 MHz [1 1 1 1 1 1 x x 1 1 1 1 1 1] |
| case 5 | 280 MHz [1 1 1 1 1 1 1 1 x x 1 1 1 1 1 1] |
| case 6 | 280 MHz [1 1 1 1 1 1 1 1 1 1 x x 1 1 1 1] |
| case 7 | 280 MHz [1 1 1 1 1 1 1 1 1 1 1 1 x x 1 1] |
| case 8 | 280 MHz [1 1 1 1 1 1 1 1 1 1 1 1 1 1 x x] |
| case 9 | 240 MHz [1 1 1 1 x x x x 1 1 1 1 1 1 1 1] |
| case 10 | 240 MHz [1 1 1 1 1 1 1 1 x x x x 1 1 1 1] |
| case 11 | 240 MHz [1 1 1 1 1 1 1 1 1 1 1 1 x x x x] |
| case 12 | 240 MHz [x x x x 1 1 1 1 1 1 1 1 1 1 1 1] |
| case 13 | 160 MHz [1 1 1 1 1 1 1 1 x x x x x x x x] |
| case 14 | 160 MHz [x x x x x x x x 1 1 1 1 1 1 1 1] |

wherein 1 or x represents one 20 MHz in the 320 MHz, "1" indicates that the 20 MHz is not punctured, "x" indicates that the 20 MHz is punctured, "280 MHz", "240 MHz", or "160 MHz" indicates a size of a frequency occupied after the 320 MHz is punctured, and 20 MHz in "[]" is sorted in a sequence from a low frequency to a high frequency or from a high frequency to a low frequency in 320 MHz.

**23.** The PPDU transmission apparatus according to claim 19 or 20, wherein there are any one or more of the following puncturing patterns for 320 MHz:

| | |
|---|---|
| case 1 | 320 MHz [1 1 1 1 1 1 1 1 1 1 1 1 1 1 1 1] |
| case 2 | 280 MHz [x x 1 1 1 1 1 1 1 1 1 1 1 1 1 1] |
| case 3 | 280 MHz [1 1 xx 1 1 1 1 1 1 1 1 1 1 1 1] |
| case 4 | 280 MHz [1 1 1 1 xx 1 1 1 1 1 1 1 1 1 1] |
| case 5 | 280 MHz [1 1 1 1 1 1 x x 1 1 1 1 1 1 1 1] |
| case 6 | 280 MHz [1 1 1 1 1 1 1 1 x x 1 1 1 1 1 1] |
| case 7 | 280 MHz [1 1 1 1 1 1 1 1 1 1 x x 1 1 1 1] |
| case 8 | 280 MHz [1 1 1 1 1 1 1 1 1 1 1 1 x x 1 1] |
| case 9 | 280 MHz [1 1 1 1 1 1 1 1 1 1 1 1 1 1 x x] |
| case 10 | 240 MHz [1 1 1 1 x x x x 1 1 1 1 1 1 1 1] |
| case 11 | 240 MHz [1 1 1 1 1 1 1 1 x x x x 1 111] |
| case 12 | 240 MHz [1 1 1 1 1 1 1 1 1 1 1 1 x x x x] |
| case 13 | 240 MHz [x x x x 1 1 1 1 1 1 1 1 1 1 1 1] |
| case 14 | 160 MHz [11 1 1 1 1 1 1 x x x x x x x x] |
| case 15 | 160 MHz [xxxxxxxx 1 1 1 1 111 1] |

wherein 1 or x represents one 20 MHz in the 320 MHz, "1" indicates that the 20 MHz is not punctured, "x" indicates that the 20 MHz is punctured, "320 MHz", "280 MHz", "240 MHz", or "160 MHz" indicates a size of a frequency occupied after the 320 MHz is punctured, and 20 MHz in "[]" is sorted in a sequence from a low frequency to a high frequency or from a high frequency to a low frequency in 320 MHz.

24. The PPDU transmission apparatus according to claim 19 or 20, wherein there are any one or more of the following puncturing patterns for 320 MHz:

| case 1 | 320 MHz [1 1 1 1 1 1 1 1 1 1 1 1 1 1 1 1] |
|---|---|
| case 2 | 280 MHz [x x 1 1 1 1 1 1 1 1 1 1 1 1 1 1] |
| case 3 | 280 MHz [1 1 xx 1 1 1 1 1 1 1 1 1 1 1 1] |
| case 4 | 280 MHz [1 1 1 1 xx 1 1 1 1 1 1 1 1 1 1] |
| case 5 | 280 MHz [1 1 1 1 1 1 x x 1 1 1 1 1 1 1 1] |
| case 6 | 280 MHz [1 1 1 1 1 1 1 1 x x 1 1 1 1 1 1] |
| case 7 | 280 MHz [1 1 1 1 1 1 1 1 1 1 x x 1 1 1 1] |
| case 8 | 280 MHz [1 1 1 1 1 1 1 1 1 1 1 1 x x 1 1] |
| case 9 | 280 MHz [1 1 1 1 1 1 1 1 1 1 1 1 1 1 x x] |
| case 10 | 240 MHz [1 1 1 1 x x x x 1 1 1 1 1 1 1 1] |
| case 11 | 240 MHz [1 1 1 1 1 1 1 1 x x x x 1 1 1 1] |
| case 12 | 240 MHz [1 1 1 1 1 1 1 1 1 1 1 1 x x x x] |
| case 13 | 240 MHz [x x x x 1 1 1 1 1 1 1 1 1 1 1 1] |

wherein 1 or x represents one 20 MHz in the 320 MHz, "1" indicates that the 20 MHz is not punctured, "x" indicates that the 20 MHz is punctured, "320 MHz", "280 MHz", or "240 MHz" indicates a size of a frequency occupied after the 320 MHz is punctured, and 20 MHz in "[]" is sorted in a sequence from a low frequency to a high frequency or from a high frequency to a low frequency in 320 MHz.

25. The PPDU transmission apparatus according to any one of claims 14 to 17, wherein X=320, and the rotation factor sequence is any one of the following sequences: [1 -1 -1 -1 j j j -1 j -1 j 1 j -1 j -j], [1 -1 -1 -1 1-1 -1 -1 j], [1 -1 -1 -1 j -1 1j j 1 -1j -1 -1 -1 1], [1 -1 -1 -1 1 1 -1 -1 -1 -1 -1 -1 1 -1 1 1], [1 -1 -1 -1 j j j -1 j -1 -jj -jj 1 -j], [1 -1 -1 -1 1 -1 -1 -1 -1 -1-11-111 -1], [1 -1 -1 -11-1-1-1-1111-111 1], [1 - 1-1-1-1-1-1111-11-111 -1], [1 -1 -1 -1 1 -1 -1 -1 -1 -1-11-111 -1], [1 -1 -1 -1 1-1-1-1-1111 -1 1 1 1], [1 -1 -1 -1-1-1111-11-111 -1], [1 -1 -1 -1 1 -1 -1 -1 -1 -1-11-111 -1], [1 -1 -1 -1 1 -1 -1-1-1 1 1 1-1 1 1 1], [1 -1 -1 -1j 1-1j -1 j -1 j j j -1 1], and [1 -1 -1 -1 1-1 -1 -1 -1 -1 -1 1-1 1 1-1].

26. The PPDU transmission apparatus according to any one of claims 14 to 17, wherein X = 240, and the rotation factor sequence is any one of the following sequences: [1 -1 -1 -1 1-1 1 1-1 1 1 1], [1 j -j -1 -1 j j -1-1 j j 1], [1-1 1 1 1 -1 1-1 -1 1 1 1], [1 1 1 -1 -1 1-1 1 1 1-1 1], [1-1 -1 -1 j 1-j 1 1 1-1 1], [1 -1-1-1 1 1 1 -1 1 1-1 1], [1111-1-111-11-1 1], [1 -1 -1 -1 -1 1 -1 -1 -1 -1 1j 1], [1 -1 -1 -1 -1 -1 -1 1 -1 1 1 -1], [1 1 -1j -1 -1 - j j -1j j -j], [1 -1 -1 -1 1 -1 -1 -1 j -1 -1 1], [1 -1 -1 -1 1 -1 -1 -1-111 1], [1 -1 -1 -1 -1 -1-11-111 -1], [1 1 -1 1 -1 1 -1 -1 -1 -1 1 1], [1 -1 -1 -1 1 -1 -1 -1 j -1 -1 1], [1 -1 -1 -1 1 -1 -1 -1-111 1], [1 -1 -1 -1 -1 -1 - 1 1 -1 1 1 -1], [11-11-11 -1 -1 -1 -1 1 1], [1 -1 -1 -1 1 -1-1 -1 j -1 -1 1], [1 -1 -1 -1 1 -1 -1 -1-111 1], [1 -1 -1 -1 -1 -1 -1 1-1 1 1 -1], [1j -1 -j j 1 j 1 j 1 -j -1], [1 -1 -1 -1 1 -1 -1 -1 j -1 -1 1], and [1-1 -1 -1 1-1-1 -1-1111].

27. A computer-readable storage medium, wherein the computer-readable storage medium stores a computer program, and when the computer program is executed by a processor, the method according to any one of claims 1 to 13 is implemented.

28. A computer program product, wherein when the computer program product is executed on a computer, the method according to any one of claims 1 to 13 is implemented.

FIG. 1

EHT PPDU

| EHT-SIG common field | EHT-SIG user specific field |

| L-STF | L-LTF | L-SIG | RL-SIG | U-SIG SYM 1 | U-SIG SYM 2 | EHT-SIG | EHT-STF | EHT-LTF | Data |

| Version-independent field | Version-dependent field | Cyclic redundancy code | Tail |

FIG. 2

Transmit device

Receive device

S301: Generate a physical layer
protocol data unit with a bandwidth
of X MHz

S302: Physical layer protocol data unit with
the bandwidth of X MHz

S303: Perform rotation recovery on
the physical layer protocol data unit
based on a rotation factor sequence

FIG. 3

EP 4 145 784 A1

| | | | | | | | | |
|---|---|---|---|---|---|---|---|---|
| First 20 MHz | L-STF | L-LTF | L-SIG | RL-SIG | U-SIG | EHT-SIG | | |
| Second 20 MHz | Duplicate L-STF | Duplicate L-LTF | Duplicate L-SIG | Duplicate RL-SIG | Duplicate U-SIG | Duplicate EHT-SIG | EHT-STF | EHT-LTF | Data |
| Sixteenth 20 MHz | Duplicate L-STF | Duplicate L-LTF | Duplicate L-SIG | Duplicate RL-SIG | Duplicate U-SIG | Duplicate EHT-SIG | | |

Frequency domain

320 MHz

Time domain

FIG. 4

$$S_{80}$$

| $S_{20}$ | $-S_{20}$ | $-S_{20}$ | $-S_{20}$ |
|---|---|---|---|

−128          −64          0          64          127

FIG. 5

600

Information transmission
apparatus

| Generation unit | 61 |

| Sending unit | 62 |

FIG. 6

700

Information transmission
apparatus

| Receiving unit | 71 |

| Processing unit | 72 |

FIG. 7

| Communication interface/ Transceiver 83 | | Processor/ Processing circuit 82 |
| --- | --- | --- |

84

| Memory/ Storage medium 81 |

FIG. 8

| Communication interface/ Transceiver 93 | | Processor/ Processing circuit 92 |
| --- | --- | --- |

94

| Memory/ Storage medium 91 |

FIG. 9

## INTERNATIONAL SEARCH REPORT

International application No.

**PCT/CN2021/094442**

### A. CLASSIFICATION OF SUBJECT MATTER

H04L 27/26(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; 3GPP: 物理层协议数据单元, 物理层数据单元, 旋转因子, 旋转矢量, 旋转序列, 旋转向量, 打孔, 穿孔, 空白, PPDU, rotat+ 2w factor?, twiddl+ 2w factor?, preamble puncture?, physical protocol data unit

### C. DOCUMENTS CONSIDERED TO BE RELEVANT

| Category* | Citation of document, with indication, where appropriate, of the relevant passages | Relevant to claim No. |
|---|---|---|
| X | CN 110324268 A (HUAWEI TECHNOLOGIES CO., LTD.) 11 October 2019 (2019-10-11) claims 1-22, description paragraphs [0052]-[0145] | 1-28 |
| A | CN 110557843 A (HUAWEI TECHNOLOGIES CO., LTD.) 10 December 2019 (2019-12-10) entire document | 1-28 |
| A | CN 105052102 A (QUALCOMM INC.) 11 November 2015 (2015-11-11) entire document | 1-28 |
| A | US 2017373911 A1 (LG ELECTRONICS INC.) 28 December 2017 (2017-12-28) entire document | 1-28 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2021** | **12 August 2021** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/094442**

| Patent document cited in search report | | | Publication date (day/month/year) | Patent family member(s) | | | Publication date (day/month/year) |
|---|---|---|---|---|---|---|---|
| CN | 110324268 | A | 11 October 2019 | US | 2021014097 | A1 | 14 January 2021 |
| | | | | EP | 3780531 | A1 | 17 February 2021 |
| | | | | WO | 2019184626 | A1 | 03 October 2019 |
| CN | 110557843 | A | 10 December 2019 | IN201934021297 | | A | 06 December 2019 |
| | | | | EP | 3576483 | A1 | 04 December 2019 |
| | | | | JP | 2019213195 | A | 12 December 2019 |
| | | | | US | 2019372706 | A1 | 05 December 2019 |
| | | | | JP | 6847157 | B2 | 24 March 2021 |
| CN | 105052102 | A | 11 November 2015 | EP | 2926516 | A1 | 07 October 2015 |
| | | | | WO | 2014085686 | A1 | 05 June 2014 |
| | | | | US | 9258163 | B2 | 09 February 2016 |
| | | | | US | 2014153507 | A1 | 05 June 2014 |
| | | | | KR | 20150090189 | A | 05 August 2015 |
| | | | | JP | 2016504839 | A | 12 February 2016 |
| | | | | KR | 101729235 | B1 | 21 April 2017 |
| | | | | JP | 6062564 | B2 | 18 January 2017 |
| | | | | IN201502575 | | P4 | 01 July 2016 |
| US | 2017373911 | A1 | 28 December 2017 | WO | 2016089056 | A1 | 09 June 2016 |
| | | | | US | 10135662 | B2 | 20 November 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010421304

- CN 202010463450X